(19) Europäisches Patentamt

European Patent Office

Office européen des brevets

(11) **EP 1 542 471 A1**

(12) **EUROPEAN PATENT APPLICATION**
published in accordance with Art. 158(3) EPC

(43) Date of publication:
**15.06.2005 Bulletin 2005/24**

(51) Int Cl.⁷: **H04N 7/18**, G09G 5/00

(21) Application number: **03741438.0**

(22) Date of filing: **17.07.2003**

(86) International application number:
**PCT/JP2003/009062**

(87) International publication number:
**WO 2004/014080 (12.02.2004 Gazette 2004/07)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **31.07.2002 JP 2002224150**

(71) Applicant: **Sony Corporation**
**Tokyo 141-0001 (JP)**

(72) Inventors:
• **YACHI, Kiyotake c/o SONY CORPORATION**
  **Shinagawa-ku, Tokyo 141-0001 (JP)**
• **DEGUCHI, Satoshi c/o SONY CORPORATION**
  **Shinagawa-ku, Tokyo 141-0001 (JP)**
• **KOGA, Tadaharu c/o SONY CORPORATION**
  **Shinagawa-ku, Tokyo 141-0001 (JP)**

(74) Representative: **Mills, Julia et al**
**D Young & Co**
**120 Holborn**
**London EC1N 2DY (GB)**

(54) **IMAGE PROCESSING DEVICE, METHOD, INFORMATION PROCESSING DEVICE, METHOD, RECORDING MEDIUM, AND PROGRAM**

(57) The present invention relates to an apparatus and a method for image processing, an apparatus and a method for information processing, a recording medium, and a program that enable appropriate divided display according to a use condition. An image processing apparatus 11 can generate an HD image in which N images are dividedly displayed by setting pixel values of images obtained as a result of image pickup by video cameras 2 in the predetermined HD image using a coordinate conversion table in which coordinates on a display 12A, coordinates on a small screen for displaying an image obtained as a result of image pickup by a video camera 2, the small screen including the coordinates on the display 12A, the coordinates on the small screen corresponding to the coordinates on the display 12A, and a camera number of the video camera 2 providing the image to be displayed on the small screen are associated with each other, the coordinate conversion table being generated by a coordinate conversion table generating apparatus 13 on the basis of a use condition such as the number of video cameras 2, arrangement positions of the video cameras 2, a divided display format, lens distortion of the video camera 2, or the like.

F I G. 6

EP 1 542 471 A1

# Description

Technical Field

The present invention relates to an apparatus and a method for image processing, an apparatus and a method for information processing, a recording medium, and a program, and particularly to an apparatus and a method for image processing, an apparatus and a method for information processing, a recording medium, and a program that enable appropriate divided display of a plurality of images.

Background Art

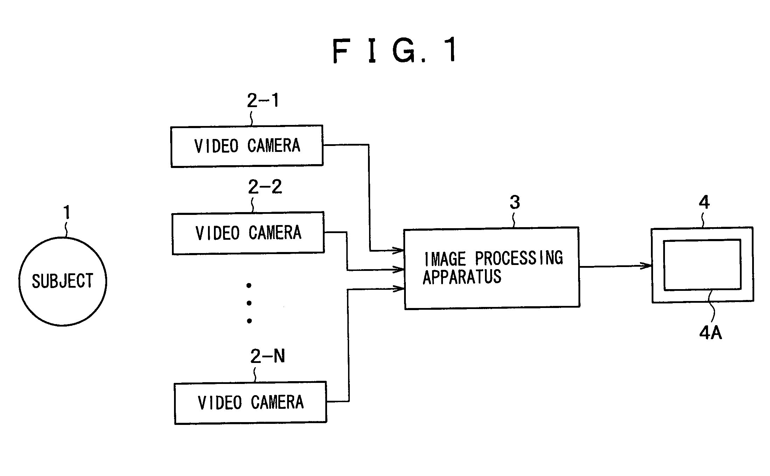

FIG. 1 shows an example of configuration of a conventional image processing system.

N video cameras 2-1 to 2-N (referred to simply as a video camera 2 when the video cameras 2-1 to 2-N do not need to be differentiated from each other, and the same applies in other cases) disposed at predetermined positions with respect to a subject 1 supply an image obtained as a result of image pickup to an image processing apparatus 3.

The image processing apparatus 3 generates an image in which the N images supplied from the video camera 2 are dividedly displayed on a display 4A of a display device 4. The image processing apparatus 3 supplies the generated image to the display device 4. The display device 4 displays the image from the image processing apparatus 3 on the display 4A.

The content of processing of the image processing apparatus 3 differs depending on the number of video cameras 2 and a divided display format.

For example, the content of processing of the image processing apparatus 3 differs between a case where nine (N = 9) video cameras 2-1 to 2-9 are disposed so as to surround a subject 1 as shown in FIG. 2 and nine images obtained as a result of image pickup by the video camera 2 are dividedly displayed as shown in FIG. 3 and a case where eight (N = 8) video cameras 2-1 to 2-8 are disposed such that scenery in all directions of 360 degrees is a subject 1 as shown in FIG. 4 and eight images obtained as a result of image pickup by the video camera 2 are dividedly displayed as shown in FIG. 5.

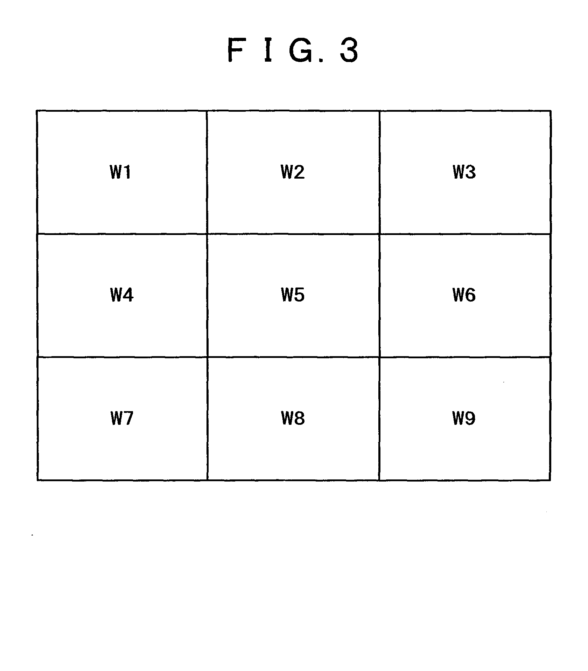

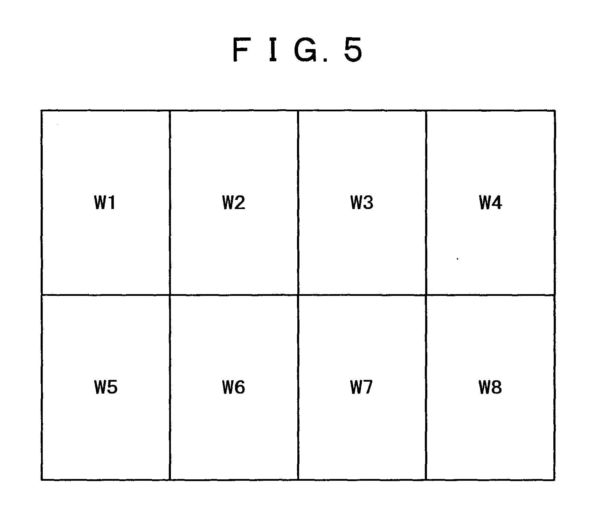

A number attached to a small screen W shown in FIG. 3 and FIG. 5 indicates a video camera 2 as a providing source of an image to be displayed on the small screen W, and is associated with a number succeeding the video camera 2. Specifically, for example, an image obtained as a result of image pickup by the video camera 2-1 is displayed on a small screen W1, and an image obtained as a result of image pickup by the video camera 2-2 is displayed on a small screen W2.

In addition, in order to properly display each of the images obtained as a result of image pickup by the video camera 2 on the small screen W, these images need to be corrected on the basis of lens distortion of the video camera 2 or the like. However, since the lens distortion or the like differs between different video cameras 2, the image processing performed by the image processing apparatus 3 also becomes different accordingly.

Thus, the image processing apparatus 3 has been a dedicated apparatus meeting these conditions. The conventional image processing system consequently cannot deal readily with a change in the use condition.

Disclosure of the Invention

The present invention has been made in view of such a situation, and it is an object of the present invention to make it possible to deal readily with a change in the use condition.

According to the present invention, there is provided an image processing apparatus including: detecting means for detecting coordinates on a small screen for displaying a small image including predetermined coordinates on a large screen for displaying a large image including a plurality of small images disposed at predetermined positions, the coordinates on the small screen corresponding to the predetermined coordinates on the large screen; reading means for reading a pixel value of a pixel of the predetermined small image, the pixel being located at a position corresponding to the coordinates on the small screen detected by the detecting means; and outputting means for outputting the pixel value read by the reading means as a pixel value of a pixel of the large image, the pixel being located at a position corresponding to the predetermined coordinates on the large screen.

The image processing apparatus further includes storing means for storing a table in which the coordinates on the large screen, the coordinates on the small screen including the coordinates on the large screen, the coordinates on the small screen corresponding to the coordinates on the large screen, and information for identifying the small image to be displayed on the small screen are associated with each other, wherein the detecting means can detect the coordinates on the small screen including the predetermined coordinates on the large screen, the coordinates on the small screen corresponding to the predetermined coordinates, from the table; and the reading means can read the pixel value of the pixel of the small image identified by the information for identifying the small image, the information being associated with the predetermined coordinates in the table, the pixel being located at the position corresponding to the coordinates on the small screen detected by the detecting means.

The small image can be an image corresponding to a picked-up image obtained as a result of image pickup by an image pickup device.

According to the present invention, there is provided an image processing method including: a detecting step for detecting coordinates on a small screen for displaying a small image including predetermined coordinates on a large screen for displaying a large image including a plurality of small images disposed at predetermined positions, the coordinates on the small screen corresponding to the predetermined coordinates on the large screen; a reading step for reading a pixel value of a pixel of the predetermined small image, the pixel being located at a position corresponding to the coordinates on the small screen detected by a process of the detecting step; and an outputting step for outputting the pixel value read by a process of the reading step as a pixel value of a pixel of the large image, the pixel being located at a position corresponding to the predetermined coordinates on the large screen.

According to the present invention, there is provided a program on a first recording medium, the program including: a detecting control step for controlling detecting coordinates on a small screen for displaying a small image including predetermined coordinates on a large screen for displaying a large image including a plurality of small images disposed at predetermined positions, the coordinates on the small screen corresponding to the predetermined coordinates on the large screen; a reading control step for controlling reading a pixel value of a pixel of the predetermined small image, the pixel being located at a position corresponding to the coordinates on the small screen detected by a process of the detecting control step; and an outputting control step for controlling outputting the pixel value read by a process of the reading control step as a pixel value of a pixel of the large image, the pixel being located at a position corresponding to the predetermined coordinates on the large screen.

According to the present invention, there is provided a first program that makes a computer perform a process including: a detecting control step for controlling detecting coordinates on a small screen for displaying a small image including predetermined coordinates on a large screen for displaying a large image including a plurality of small images disposed at predetermined positions, the coordinates on the small screen corresponding to the predetermined coordinates on the large screen; a reading control step for controlling reading a pixel value of a pixel of the predetermined small image, the pixel being located at a position corresponding to the coordinates on the small screen detected by a process of the detecting control step; and an outputting control step for controlling outputting the pixel value read by a process of the reading control step as a pixel value of a pixel of the large image, the pixel being located at a position corresponding to the predetermined coordinates on the large screen.

The image processing apparatus and method, and the first program according to the present invention detect coordinates on a small screen for displaying a small image including predetermined coordinates on a large screen for displaying a large image including a plurality of small images disposed at predetermined positions, the coordinates on the small screen corresponding to the predetermined coordinates on the large screen, read a pixel value of a pixel of the predetermined small image, the pixel being located at a position corresponding to the detected coordinates on the small screen, and output the read pixel value as a pixel value of a pixel of the large image, the pixel being located at a position corresponding to the predetermined coordinates on the large screen.

According to the present invention, there is provided an information processing apparatus including: first detecting means for detecting coordinates on a small screen including coordinates on a large screen, the coordinates on the small screen corresponding to the coordinates on the large screen; second detecting means for detecting information for identifying a small image, the information being associated with the coordinates on the large screen; and generating means for generating a first table by storing the coordinates on the large screen, the coordinates on the small screen detected by the first detecting means, and the information for identifying the small image detected by the second detecting means in association with each other.

The small image can be an image corresponding to a picked-up image obtained as a result of image pickup by an image pickup device, and the coordinates on the large screen can be associated with information for identifying the image pickup device having a corresponding image pickup area as the information for identifying the small image in each area corresponding to the image pickup area of the image pickup device.

The information processing apparatus further includes storing means for storing a second table in which coordinates on the small screen of the picked-up image for the small screen which image is cut out from the picked-up image after being subjected to correction on a basis of a condition of an optical system of the image pickup device and coordinates on the large screen when the picked-up image for the small screen is positioned on the predetermined small screen, the coordinates on the large screen corresponding to the coordinates on the small screen, are associated with each other, wherein the first detecting means can detect coordinates on the small screen corresponding to coordinates on the large screen from the second table, and detect coordinates on the small screen of the picked-up image before the correction from the detected coordinates on the small screen.

According to the present invention, there is provided an information processing method including: a first detecting step for detecting coordinates on a small screen including coordinates on a large screen, the coordinates on the small screen corresponding to the coordinates on the large screen; a second detecting step for detecting information for identifying a small image, the information being associated with the coordinates on the large screen; and a generating step for generating a first table by storing the coordinates on the large screen, the coordinates on the small screen detected by a process of the first detecting step, and the information for identifying the small image detected by a process of the second detecting step in association with each other.

According to the present invention, there is provided a program on a second recording medium, the program including: a first detecting control step for controlling detecting coordinates on a small screen including coordinates on a large screen, the coordinates on the small screen corresponding to the coordinates on the large screen; a second detecting control step for controlling detecting information for identifying a small image, the information being associated with the coordinates on the large screen; and a generating control step for controlling generating a first table by storing the coordinates on the large screen, the coordinates on the small screen detected by a process of the first detecting control step, and the information for identifying the small image detected by a process of the second detecting control step in association with each other.

According to the present invention, there is provided a second program including: a first detecting control step for controlling detecting coordinates on a small screen including coordinates on a large screen, the coordinates on the small screen corresponding to the coordinates on the large screen; a second detecting control step for controlling detecting information for identifying a small image, the information being associated with the coordinates on the large screen; and a generating control step for controlling generating a first table by storing the coordinates on the large screen, the coordinates on the small screen detected by a process of the first detecting control step, and the information for identifying the small image detected by a process of the second detecting control step in association with each other.

The information processing apparatus and method, and the second program according to the present invention detect coordinates on a small screen including coordinates on a large screen, the coordinates on the small screen corresponding to the coordinates on the large screen, detect information for identifying a small image, the information being associated with the coordinates on the large screen, and generate a first table by storing the coordinates on the large screen, the detected coordinates on the small screen, and the detected information for identifying the small image in association with each other.

Brief Description of the Drawings

FIG. 1 is a block diagram showing an example of configuration of a conventional image processing system.

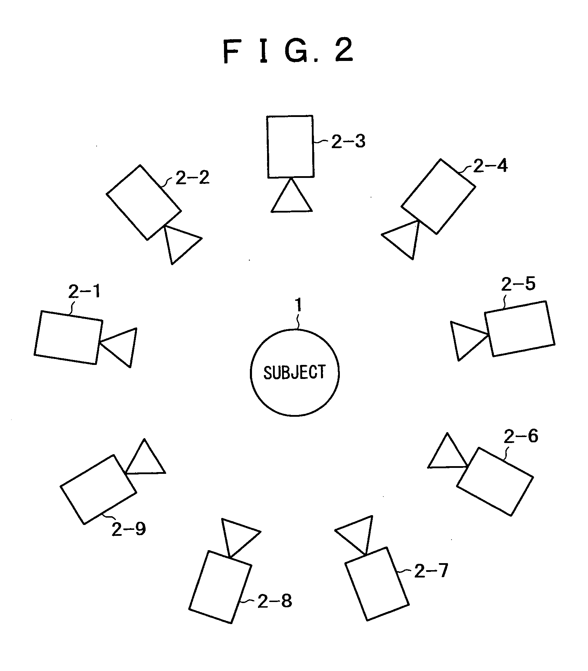

FIG. 2 is a diagram showing an example of arrangement of video cameras in FIG. 1.

FIG. 3 is a diagram showing an example of display of images obtained as a result of image pickup by the video cameras in FIG. 2.

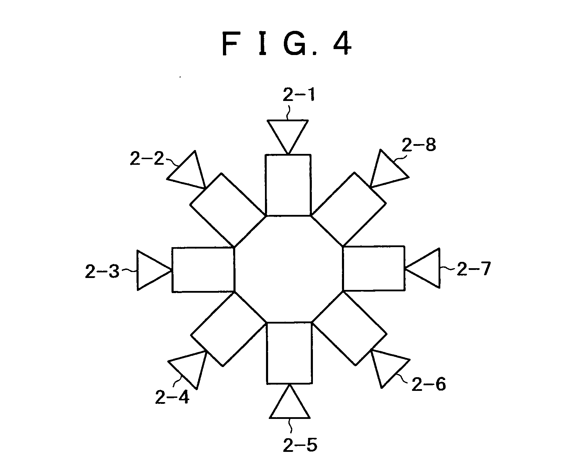

FIG. 4 is a diagram showing another example of arrangement of the video cameras in FIG. 1.

FIG. 5 is a diagram showing another example of display of images obtained as a result of image pickup by the video cameras in FIG. 4.

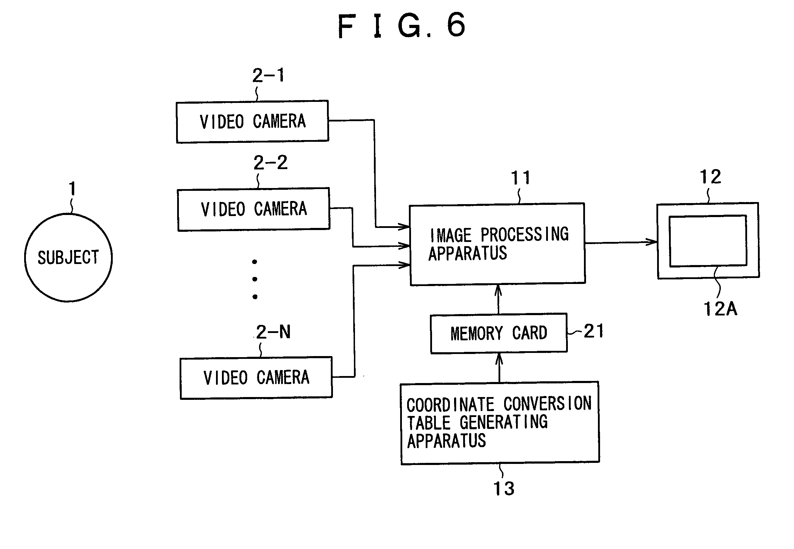

FIG. 6 is a block diagram showing an example of configuration of an image processing system to which the present invention is applied.

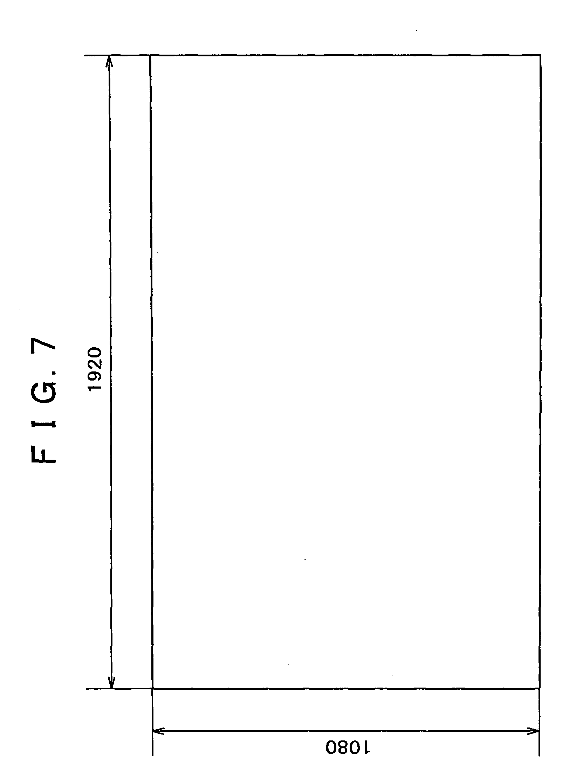

FIG. 7 is a diagram showing size of a display of a display device in FIG. 6.

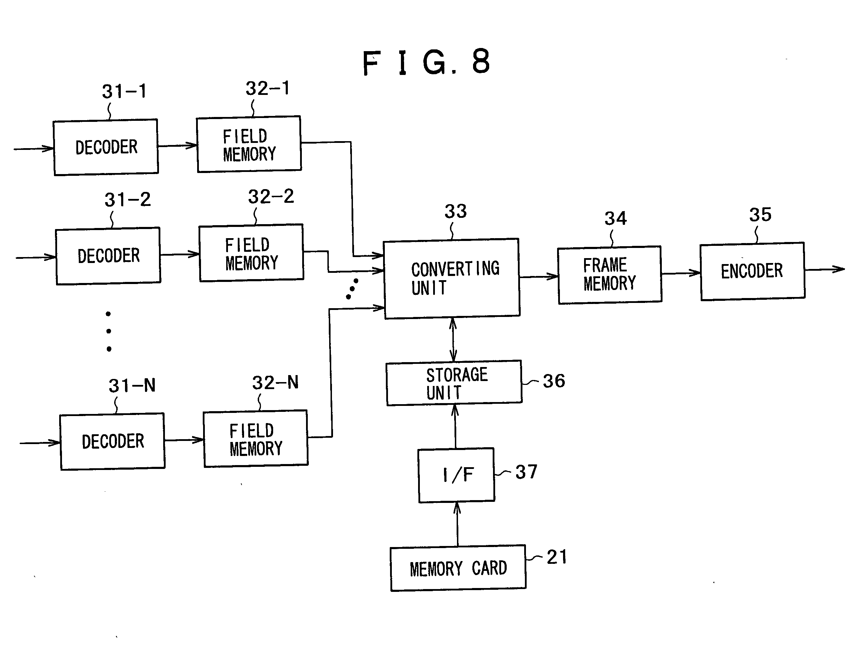

FIG. 8 is a block diagram showing an example of configuration of an image processing apparatus in FIG. 6.

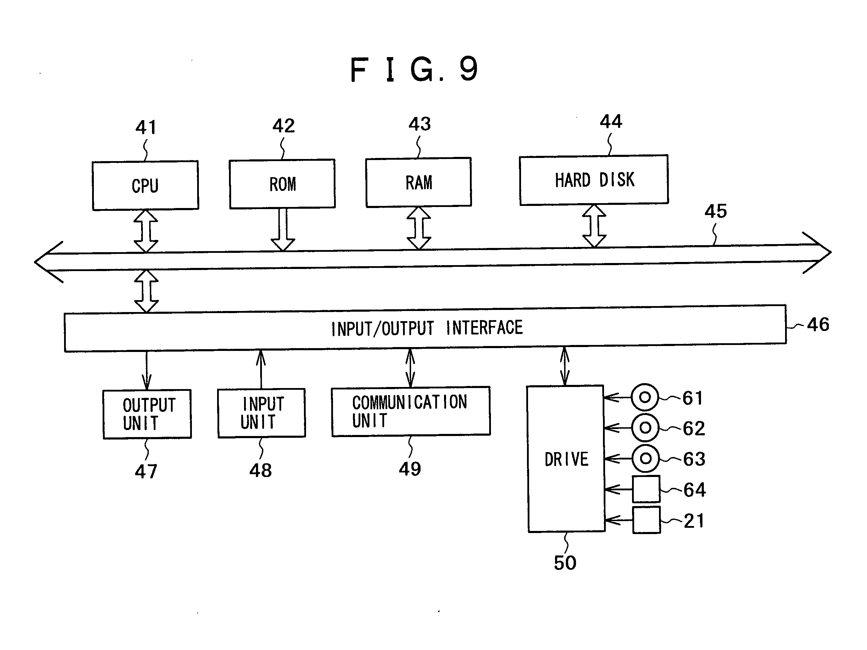

FIG. 9 is a block diagram showing an example of configuration of a coordinate conversion table generating apparatus in FIG. 6.

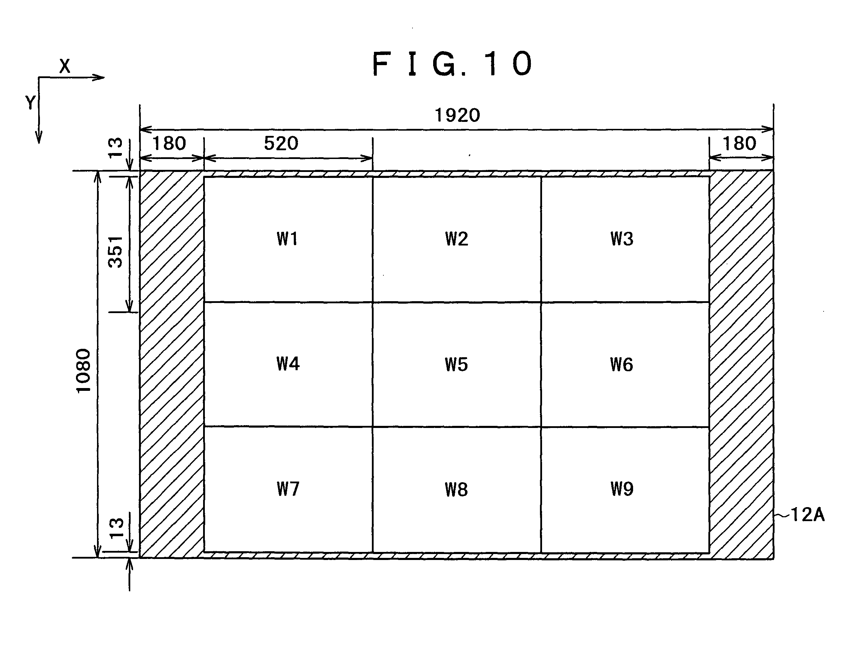

FIG. 10 is a diagram showing another example of display of images obtained as a result of image pickup by the video cameras in FIG. 2.

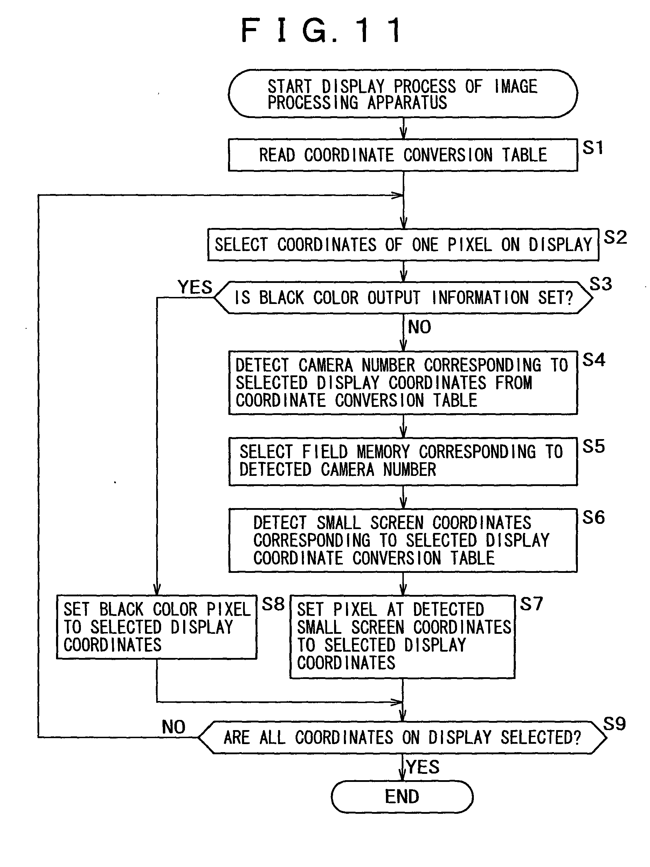

FIG. 11 is a flowchart of assistance in explaining image processing of the image processing apparatus in FIG. 6.

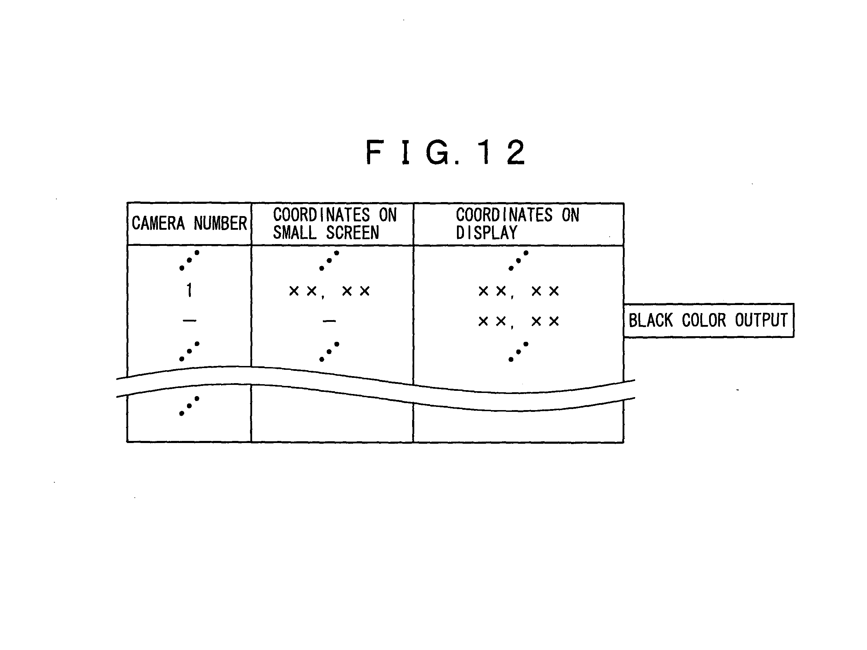

FIG. 12 is a diagram showing an example of a coordinate conversion table.

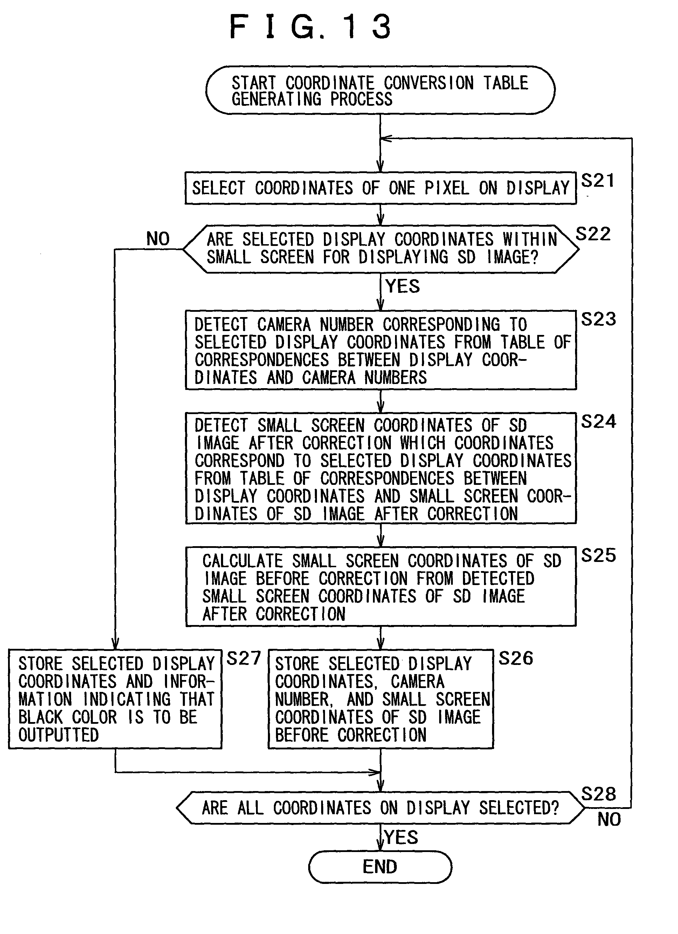

FIG. 13 is a flowchart of assistance in explaining operation of the coordinate conversion table generating apparatus in FIG. 6 when generating the coordinate conversion table.

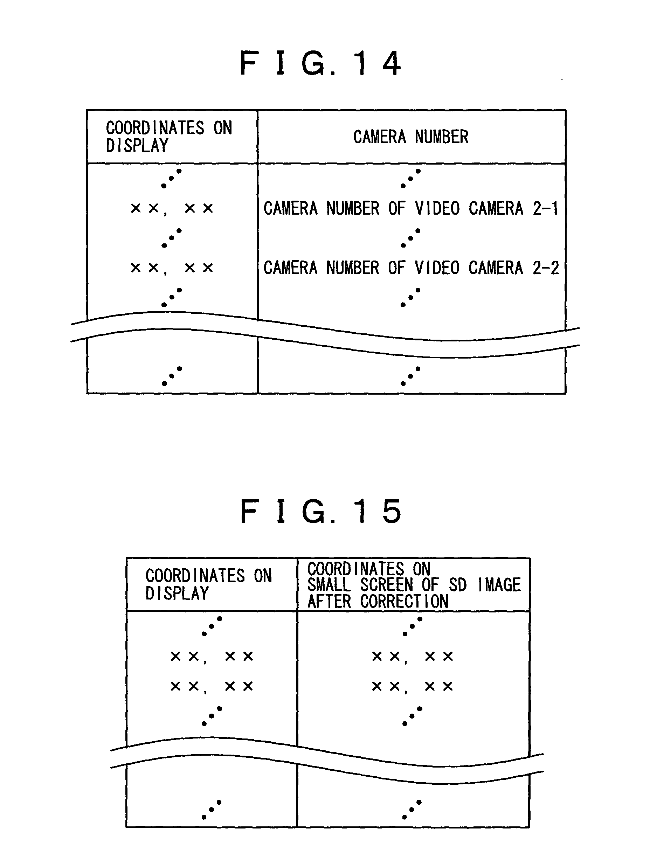

FIG. 14 is a diagram showing an example of a correspondence table of coordinates on the display and camera numbers.

FIG. 15 is a diagram showing an example of a correspondence table of coordinates on the display and coordinates on small screens of SD image after correction.

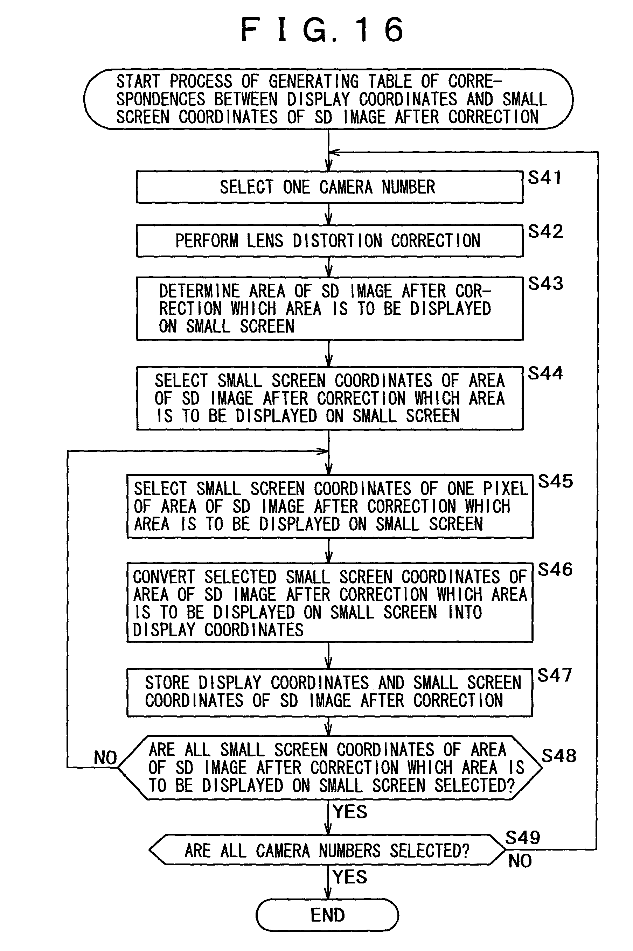

FIG. 16 is a flowchart of assistance in explaining a process of generating the correspondence table of FIG. 15.

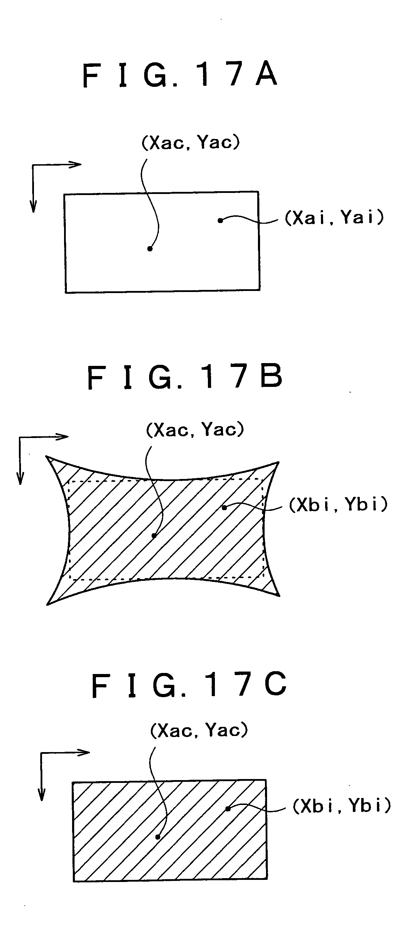

FIG. 17A is a diagram of assistance in explaining a process of generating the correspondence table of FIG. 15.

FIG. 17B is a diagram of assistance in explaining a process of generating the correspondence table of FIG. 15.

FIG. 17C is a diagram of assistance in explaining a process of generating the correspondence table of FIG. 15.

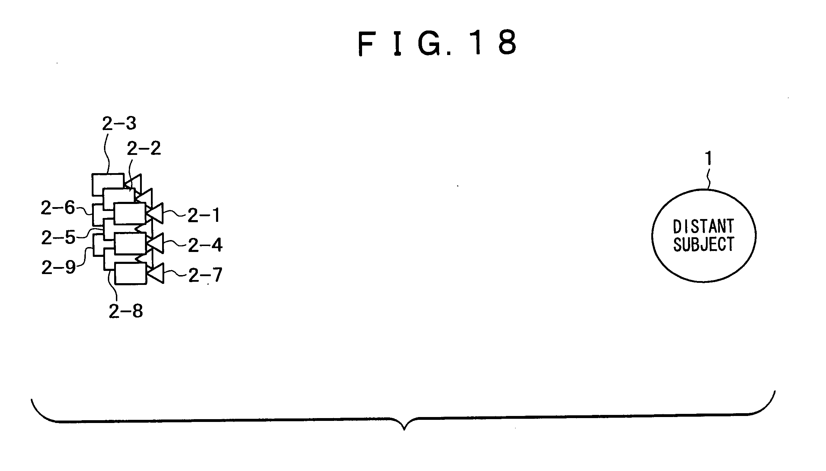

FIG. 18 is a diagram showing an example of arrangement of video cameras in FIG. 6.

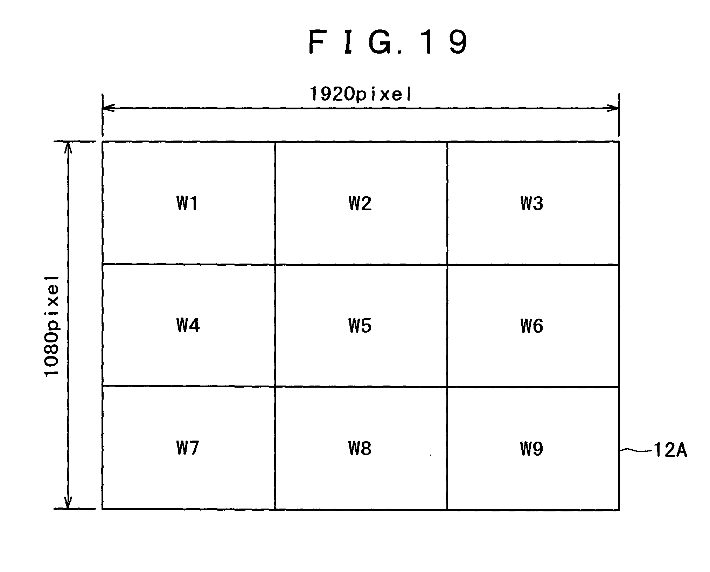

FIG. 19 is a diagram showing an example of display of images obtained as a result of image pickup by the video cameras in FIG. 18.

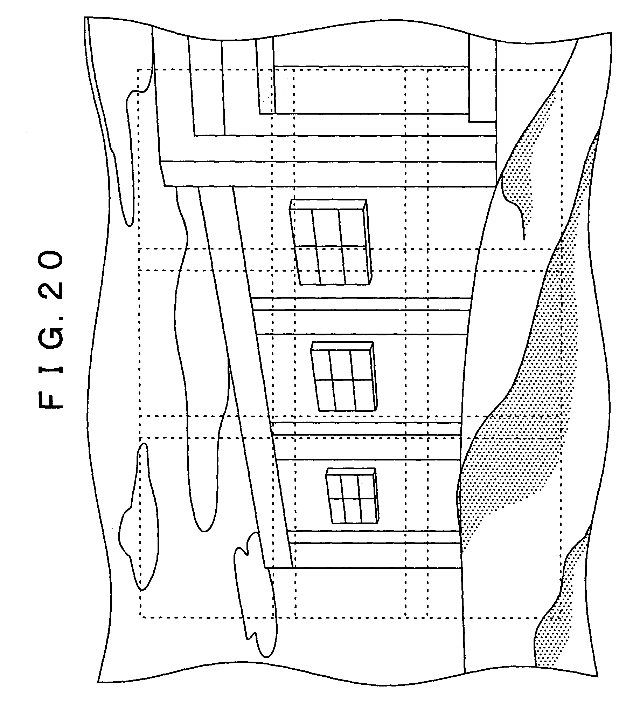

FIG. 20 is a diagram of assistance in explaining image pickup areas of the video cameras in FIG. 18.

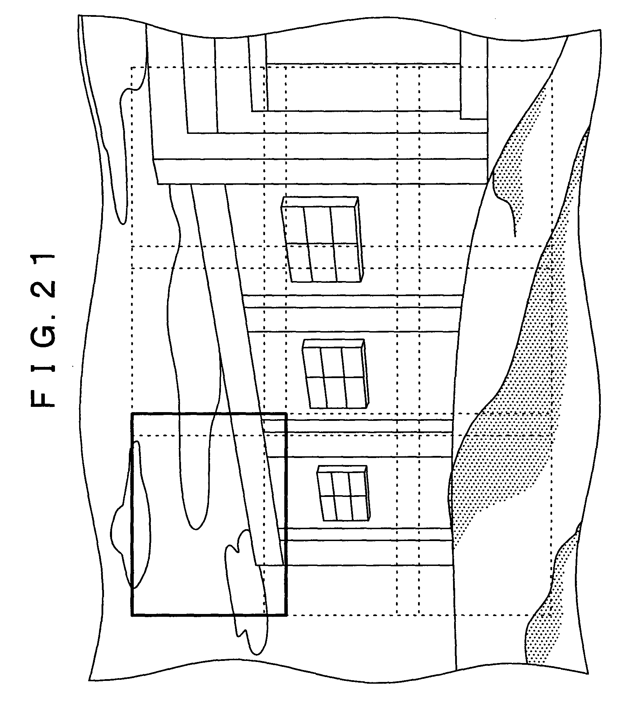

FIG. 21 is another diagram of assistance in explaining the image pickup areas of the video cameras in FIG. 18.

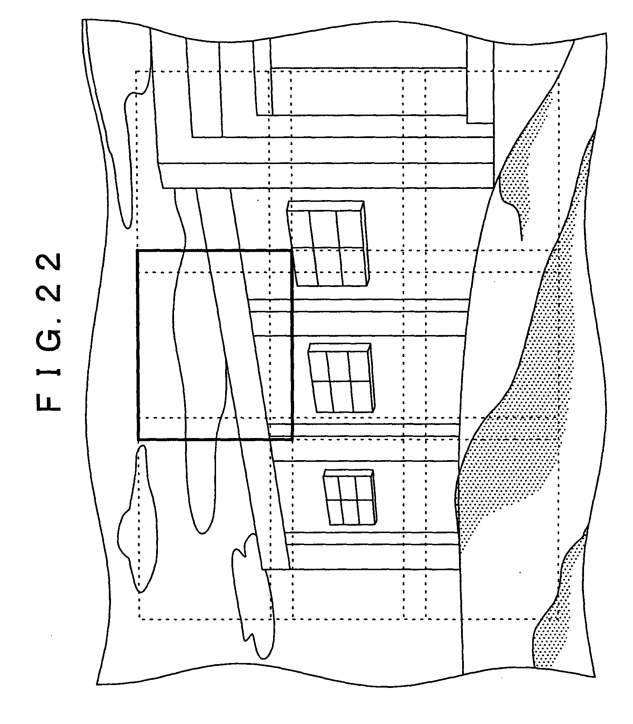

FIG. 22 is another diagram of assistance in explaining the image pickup areas of the video cameras in FIG. 18.

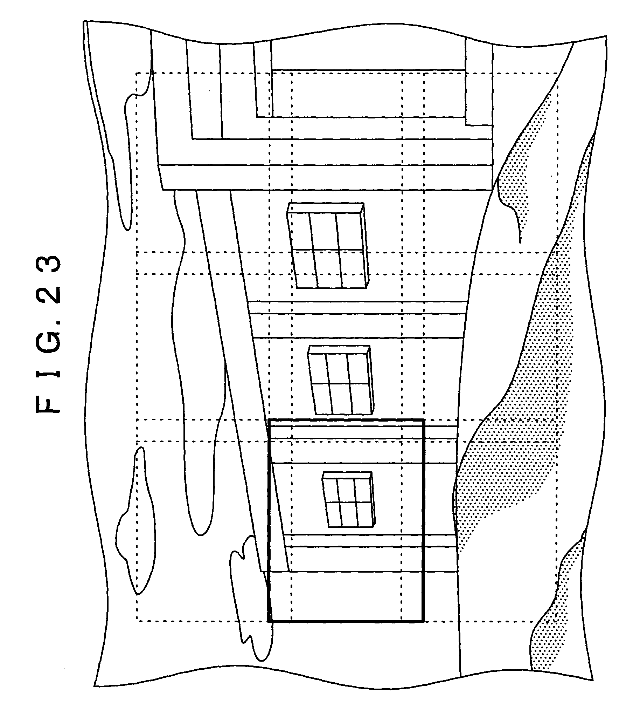

FIG. 23 is another diagram of assistance in explaining the image pickup areas of the video cameras in FIG. 18.

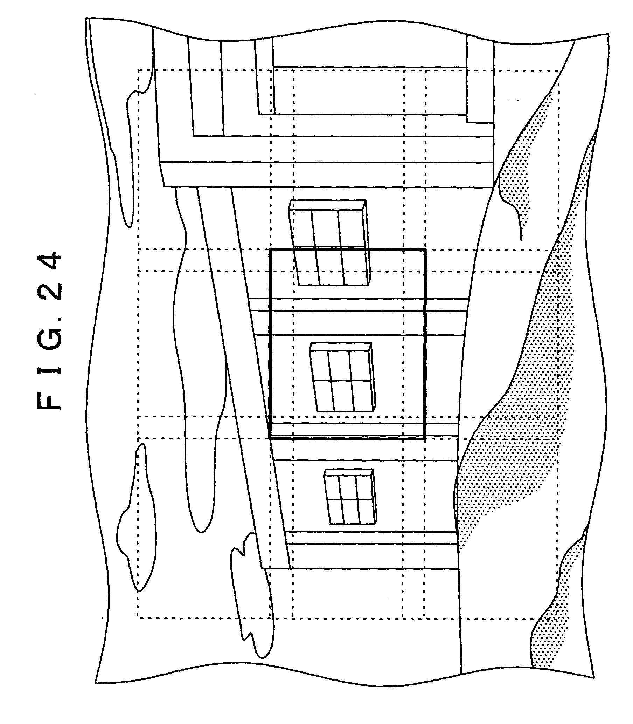

FIG. 24 is another diagram of assistance in explaining the image pickup areas of the video cameras in FIG. 18.

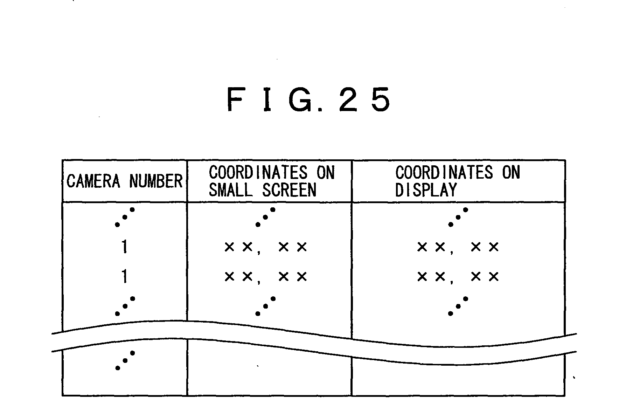

FIG. 25 is a diagram showing another example of a coordinate conversion table.

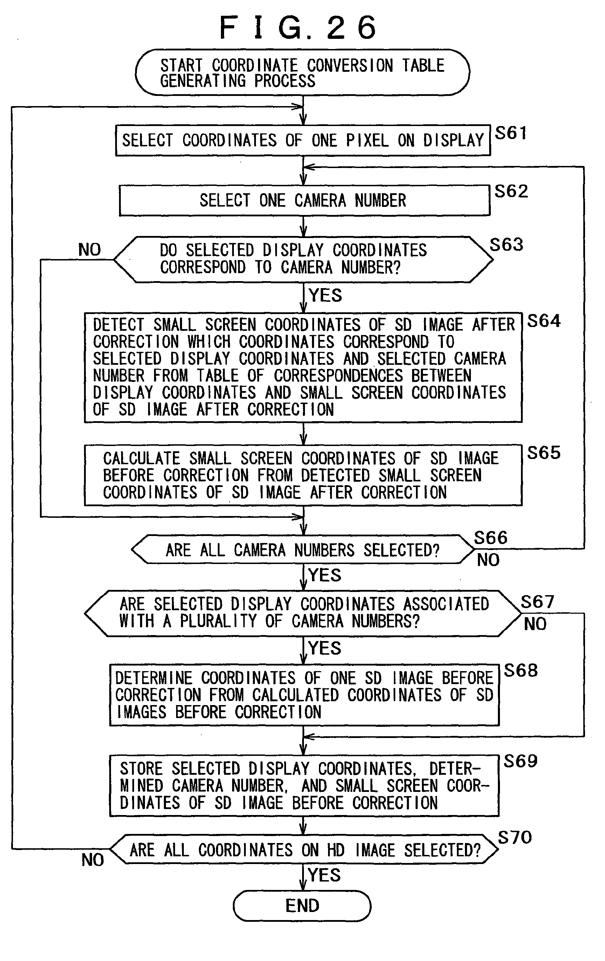

FIG. 26 is a flowchart of assistance in explaining another operation of the coordinate conversion table generating apparatus in FIG. 6 when generating the coordinate conversion table.

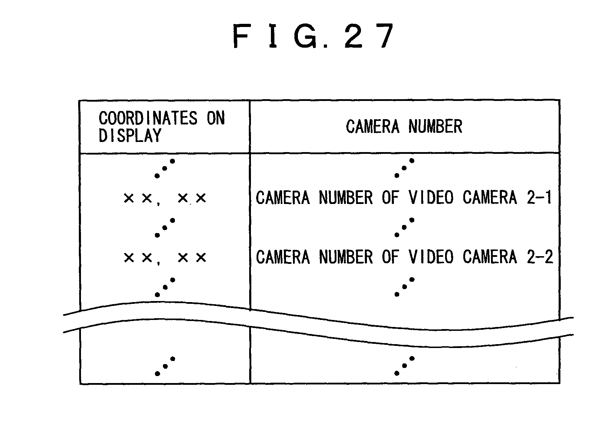

FIG. 27 is a diagram showing another example of a correspondence table of coordinates on the display and camera numbers.

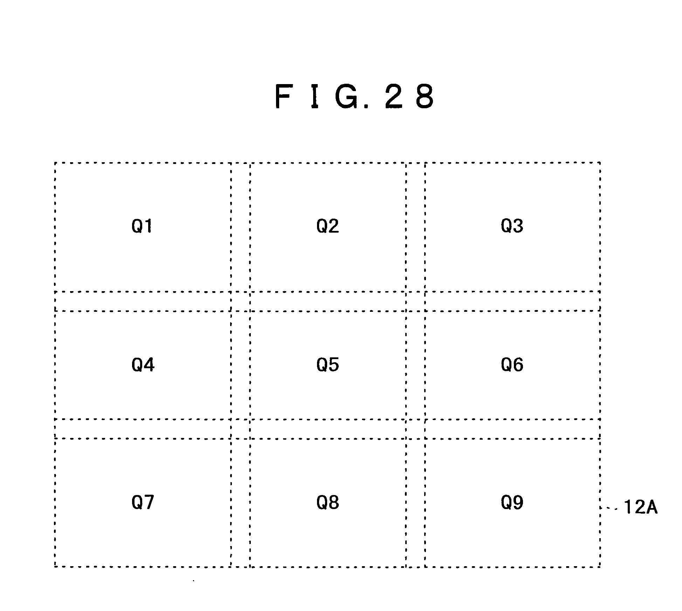

FIG. 28 is a diagram showing areas on the display corresponding to the image pickup areas of the video cameras in FIG. 18.

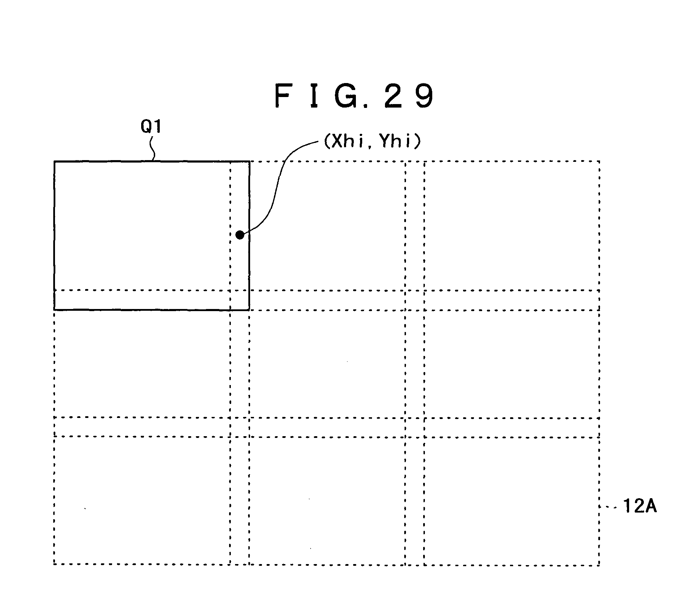

FIG. 29 is another diagram showing areas on the display corresponding to the image pickup areas of the video cameras in FIG. 18.

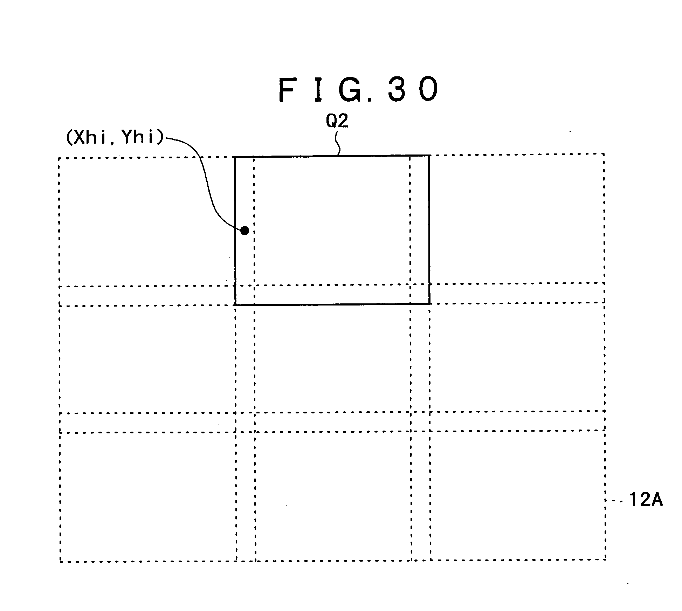

FIG. 30 is another diagram showing areas on the display corresponding to the image pickup areas of the video cameras in FIG. 18.

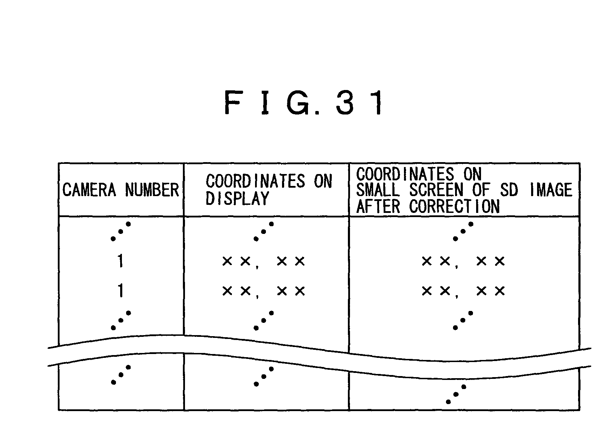

FIG. 31 is a diagram showing another example of a correspondence table of coordinates on the display and coordinates on small screens of SD images after correction.

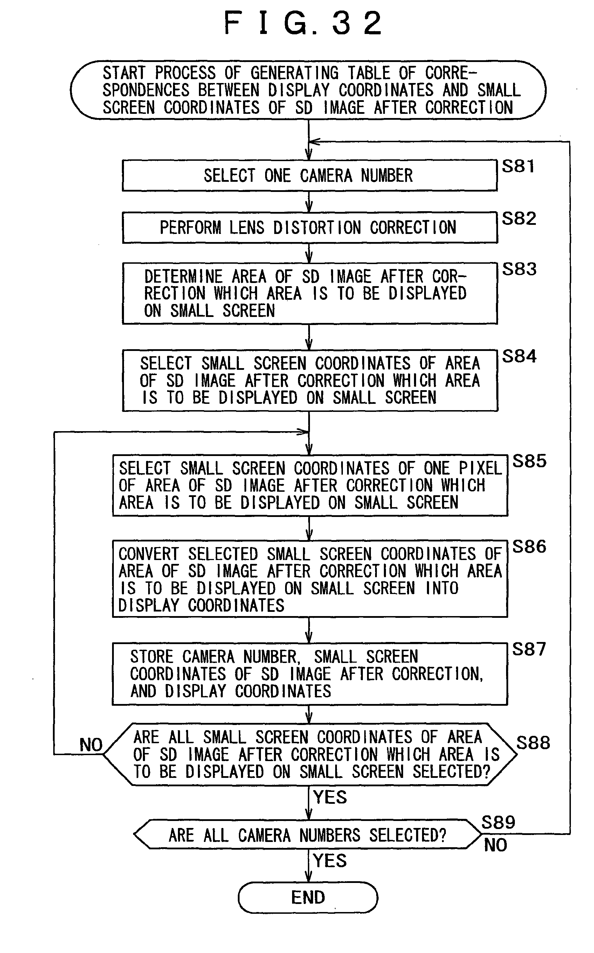

FIG. 32 is a flowchart of assistance in explaining a process of generating the correspondence table of FIG. 31.

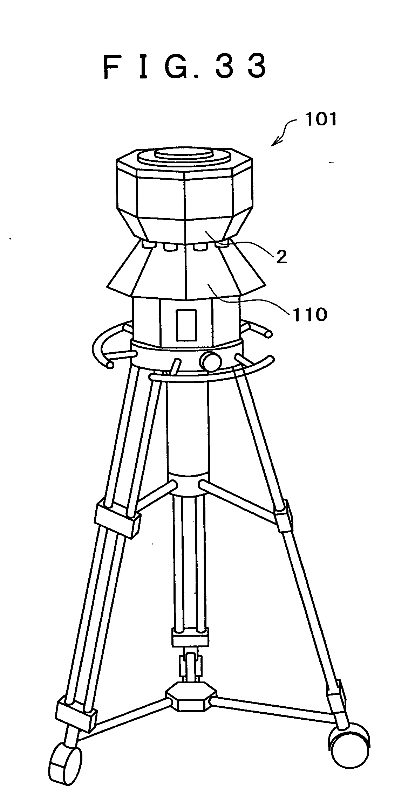

FIG. 33 is a diagram showing an external appearance of an omnidirectional camera.

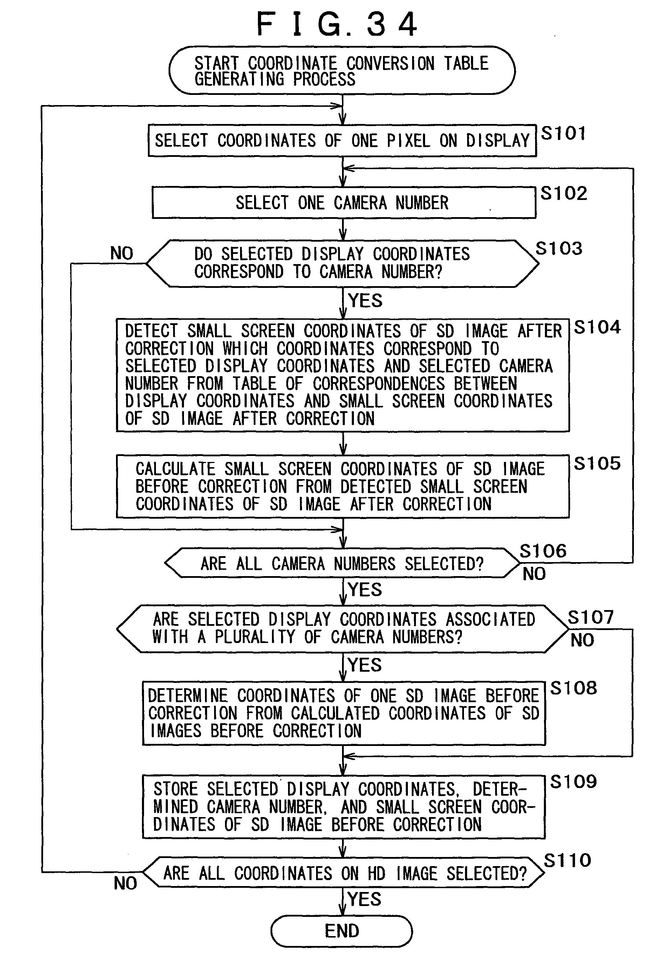

FIG. 34 is a flowchart of assistance in explaining another operation of the coordinate conversion table generating apparatus in FIG. 6 when generating the coordinate conversion table.

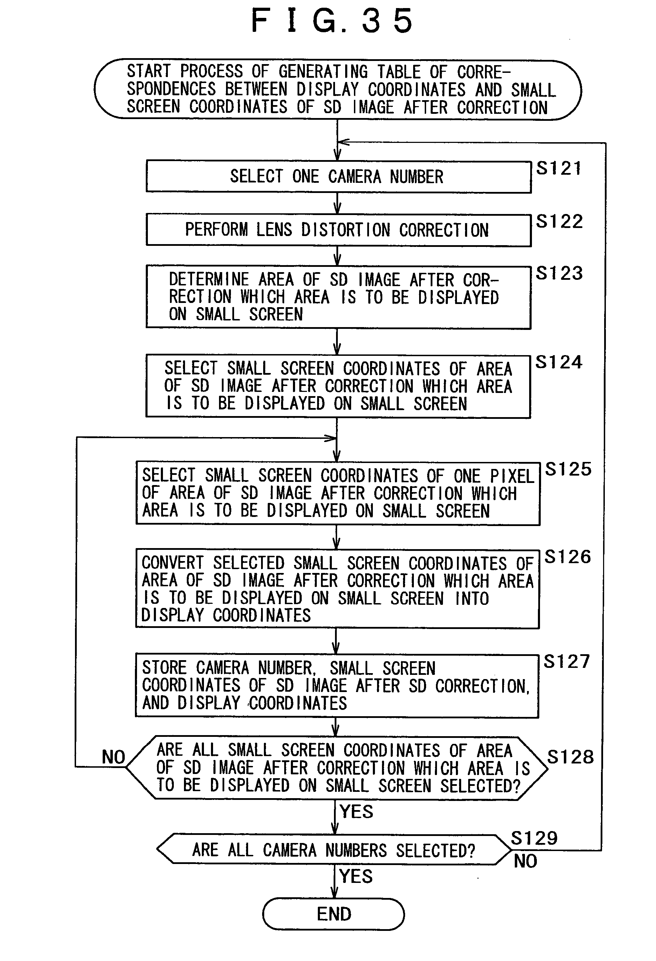

FIG. 35 is a flowchart of assistance in explaining a process of generating a correspondence table of coordinates on the display and coordinates on small screens of SD images after correction.

Best Mode for Carrying out the Invention

FIG. 6 shows an example of configuration of an image processing system to which the present invention is applied. In the figure, parts corresponding to those in FIG. 1 are identified by the same reference numerals.
N video cameras 2-1 to 2-N disposed at predetermined positions with respect to a subject 1 supply an image (for example an SD (standard definition) image) obtained as a result of image pickup to an image processing apparatus 11.
The image processing apparatus 11 generates an image (an HD (high definition) image) in which the N SD images are dividedly displayed in a predetermined form on a display 12A of a display device 12 from the SD images supplied from the respective video cameras 2-1 to 2-N using a coordinate conversion table Ta generated by a coordinate conversion table generating apparatus 13 and provided via a memory card 21. The image processing apparatus 11 supplies the generated HD image to the display device 12.
The display device 12 displays the HD image from the image processing apparatus 11 on the display 12A. Incidentally, the display 12A has a resolution of 1920 × 1080 pixels as shown in FIG. 7.
The coordinate conversion table generating apparatus 13 generates a coordinate conversion table Ta corresponding to use conditions such as the number of video cameras 2, arrangement positions of the video cameras 2, lens distortion, a display format of the SD images, and the like. The coordinate conversion table generating apparatus 13 stores the coordinate conversion table Ta in the memory card 21, for example, to provide the coordinate conversion table Ta to the image processing apparatus 11.
FIG. 8 shows an example of configuration of the image processing apparatus 11.
N decoders 31-1 to 31-N are supplied with an SD image from the corresponding video cameras 2-1 to 2-N. The decoders 31-1 to 31-N decode the SD image input from the video camera 2, and then supply the decoded SD image to corresponding field memories 32-1 to 32-N.
The field memory 32 stores the image data supplied from the decoder 31 in field units.
A converting unit 33 reads the image data stored in the field memories 32-1 to 32-N as required. The converting unit 33 generates an HD image in which N images are dividedly displayed in a predetermined form on the display 12A of the display device 12 from the read image data on the basis of the coordinate conversion table Ta stored in a storage unit 36. The converting unit 33 then supplies the HD image to a frame memory 34. The frame memory 34 stores the HD image supplied from the converting unit 33.
An encoder 35 reads and encodes image data (image data of the HD image) stored in the frame memory 34 as required. The encoder 35 supplies image data obtained as a result to the display device 12.
The storage unit 36 reads the coordinate conversion table Ta from the memory card 21 loaded in the image processing apparatus 11 via an interface 37, and then stores the coordinate conversion table Ta.
FIG. 9 shows an example of configuration of the coordinate conversion table generating apparatus 13.

A CPU (Central Processing Unit) 41 is connected with an input/output interface 46 via a bus 45. When a command is input from an input unit 48 including a keyboard, a mouse and the like via the input/output interface 46, the CPU 41 loads into a RAM (Random Access Memory) 43 a program (for example, a program for generating the coordinate conversion table Ta) stored in a ROM (Read Only Memory) 42, on a hard disk 44, or on a recording medium such as a magnetic disk 61, an optical disk 62, a magneto-optical disk 63, a semiconductor memory 64 or the like loaded into a drive 50, and the CPU 41 executes the program. Further, the CPU 41 outputs a result of the process to an output unit 47 including an LCD (Liquid Crystal Display) and the like via the input/output interface 46, for example, as required. Incidentally, the program can be provided for a user integrally with the coordinate conversion table generating apparatus 13 by being stored on the hard disk 44 or in the ROM 42 in advance, provided as a packaged medium such as the magnetic disk 61, the optical disk 62, the magneto-optical disk 63, the semiconductor memory 64 or the like, or provided from a satellite, a network or the like to the hard disk 44 via a communication unit 49.

The CPU 41 stores the generated coordinate conversion table Ta in the memory card 21 via the drive 50.

Description will next be made of operation of the image processing apparatus 11 in a case where nine (N = 9) video cameras 2-1 to 2-9 are disposed so as to surround a subject 1 at a relatively close range as shown in FIG. 2 and images obtained as a result of image pickup by the video camera 2 are dividedly displayed as shown in FIG. 10 (such a use condition will hereinafter be referred to as a first use condition as appropriate) with reference to a flowchart of FIG. 11.

In step S1, the converting unit 33 of the image processing apparatus 11 reads a coordinate conversion table Ta as shown in FIG. 12 which table is stored in the storage unit 36.

In the coordinate conversion table Ta, coordinates on the display 12A, coordinates on a small screen W including the coordinates on the display 12A, the coordinates on the small screen W corresponding to the coordinates on the display 12A, and a camera number assigned to the video camera 2 providing an image to be displayed on the small screen W are associated with each other. In addition, information indicating that black color is to be outputted (information represented by "black color output" in FIG. 12) is set to predetermined coordinates on the display 12A. Incidentally, coordinates on the display 12A associated with the information indicating that black color is to be outputted are not associated with coordinates on the small screen W or a camera number.

Next, in step S2, the converting unit 33 selects coordinates of one pixel on the display 12A (coordinates of one pixel forming an HD image).

In step S3, the converting unit 33 determines whether or not the information indicating that black color is to be outputted is associated with the coordinates on the display 12A selected in step S2 in the coordinate conversion table Ta. When the converting unit 33 determines that the information indicating that black color is to be outputted is not associated with the coordinates on the display 12A, the process proceeds to step S4 to detect a camera number associated with the selected coordinates on the display 12A from the coordinate conversion table Ta.

Next, in step S5, the converting unit 33 selects the field memory 32 corresponding to the video camera 2 assigned the camera number detected in step S4.

In step S6, the converting unit 33 detects coordinates on the small screen W associated with the coordinates on the display 12A selected in step S2 from the coordinate conversion table Ta.

Next, in step S7, the converting unit 33 reads a pixel value of a pixel of an SD image stored in the field memory 32 selected in step S5 at a position corresponding to the coordinates on the small screen W detected in step S6, and stores the pixel value as a pixel value to be output at the coordinates on the display 12A selected in step S2 in the frame memory 34.

When the converting unit 33 determines in step S3 that the information indicating that black color is to be outputted is set, the process proceeds to step S8, where the converting unit 33 stores a pixel value displayed as black color as a pixel value to be output at the coordinates on the display 12A selected in step S2 in the frame memory 34.

For example, when predetermined coordinates within a small screen W5 in FIG. 10 are selected in step S2, the selected coordinates are associated with the camera number of the video camera 2-5 and are not associated with the information indicating that black color is to be outputted in the coordinate conversion table Ta, and therefore the camera number of the video camera 2-5 is detected (step S3 and step S4). Next, the field memory 32-5 corresponding to the video camera 2-5 is selected (step S5), and the coordinates on the small screen W associated with the selected coordinates on the display 12A are detected from the coordinate conversion table Ta (step S6).

Then the pixel value of the pixel of the SD image (step S5) from the video camera 2-5 at the position corresponding to the detected coordinates on the small screen W (step S6) is stored as the pixel value to be output at the selected coordinates on the display 12A (step S7).

For example, when coordinates of a screen other than small screens W1 to W9 in FIG. 10 (a hatched part in the figure) are selected in step S2, since the information indicating that black color is to be outputted is set to such coordinates in the coordinate conversion table Ta (step S3), the pixel value displayed as black color is stored as the pixel value to be output at the selected coordinates on the display 12A (step S8).

Returning to FIG. 11, when the predetermined pixel value is stored in the frame memory 34 in step S7 or step S8, the process of step S9, where the converting unit 33 determines whether or not all coordinates on the display 12A are selected. When the converting unit 33 determines that there remain coordinates yet to be selected, the process returns to step S2 to select next coordinates on the display 12A.

When the converting unit 33 determines in step S9 that all the coordinates are selected, the process is ended.

The coordinate conversion table Ta shown in FIG. 12 is generated by the coordinate conversion table generating apparatus 13 on the basis of the first use condition and lens distortion of the video camera 2 as later described. Therefore the image processing apparatus 11 in this system performs the process as described above according to the coordinate conversion table Ta, whereby the nine SD images supplied from the video camera 2 can be dividedly displayed as shown in FIG. 10.

Description will next be made of operation of the coordinate conversion table generating apparatus 13 when generating the coordinate conversion table Ta used in the above process with reference to a flowchart of FIG. 13.

In step S21, the CPU 41 of the coordinate conversion table generating apparatus 13 selects coordinates of one pixel on the display 12A of the display device 12 (coordinates of one pixel forming an HD image) (FIG. 10).

In step S22, the CPU 41 determines whether or not the coordinates on the display 12A selected in step S21 are within a small screen W (within a screen displaying an image corresponding to an SD image obtained as a result of image pickup by the video camera 2).

Specifically, in this case, the hard disk 44 stores a correspondence table Tb1 as shown in FIG. 14 in which coordinates within the small screens W1 to W9 are associated with the camera number of the video camera 2 providing an image to be displayed at the coordinates, and coordinates within the screen other than the small screens W1 to W9 (the hatched part in FIG. 10) are associated with information indicating the screen other than the small screens W1 to W9 (hereinafter referred to as outside display area information). Referring to the correspondence table Tb1, the CPU 41 determines whether or not the coordinates on the display 12A selected in step S21 are associated with the camera number of the video camera 2.

When the CPU 41 determines in step S22 that the coordinates on the display 12A selected in step S21 are within a small screen W (when the coordinates selected in step S21 are associated with the camera number of the video camera 2 in the correspondence table Tb1), the process proceeds to step S23, where the CPU 41 detects the camera number of the video camera 2 corresponding to the coordinates on the display 12A selected in step S21 from the correspondence table Tb1.

Next, in step S24, the CPU 41 detects coordinates on the small screen W associated with the coordinates on the display 12A selected in step S21 from a correspondence table Tb2 stored in the hard disk 44 which table indicates correspondences between coordinates on the display 12A shown in FIG. 15 and coordinates on the small screen W of an image for the small screen W which image is cut out from the SD image obtained as a result of image pickup by the video camera 2 and corrected on the basis of lens distortion of the video camera 2 or the like as later described.

In step S25, the CPU 41 calculates coordinates on the small screen W of the SD image before correction (the original SD image) as later described from the coordinates on the small screen W detected in step S24.

Next, in step S26, the CPU 41 stores, in the coordinate conversion table Ta (FIG. 12), the coordinates on the display 12A selected in step S21, the camera number detected in step S23, and the coordinates on the small screen W calculated in step S25 in association with each other.

When the CPU 41 determines in step S22 that the coordinates on the display 12A selected in step S21 are not within a small screen W (when the coordinates on the display 12A selected in step S21 are associated with the outside display area information in the correspondence table Tb1), the process proceeds to step S27.

In step S27, the CPU 41 stores, in the coordinate conversion table Ta (FIG. 12), the coordinates on the display 12A selected in step S21 and the information indicating that black color is to be outputted in association with each other.

When the predetermined information is stored in the coordinate conversion table Ta in step S26 or step S27, the process proceeds to step S28, where the CPU 41 determines whether or not all the coordinates on the display 12A are selected on the display 12A. When the CPU 41 determines that there remain coordinates yet to be selected, the process returns to step S21 to select next coordinates and perform the subsequent process.

When the CPU 41 determines in step S28 that all the coordinates are selected, the process is ended.

Description will next be made of a process of generating the correspondence table Tb2 (FIG. 15) used when the coordinate conversion table Ta (FIG. 12) is generated with reference to a flowchart of FIG. 16. Incidentally, suppose in this case that the coordinate conversion table generating apparatus 13 generates the correspondence table Tb2.

In step S41, the CPU 41 of the coordinate conversion table generating apparatus 13 selects one camera number from the camera numbers of the video cameras 2-1 to 2-9.

Next, in step S42, assuming an SD image having the same size as the SD image obtained as a result of image pickup by the video camera 2 (an image having the same size as a small screen W in this case), the CPU 41 corrects coordinates (Xa, Ya) on the small screen W of each pixel forming the SD image (coordinates on the small screen W of the SD image before correction) according to Equation (1) to thereby calculate coordinates (Xb, Yb) (coordinates on the small screen of the SD image after correction). Incidentally, by thus converting the coordinates, a blurred peripheral portion of the SD image resulting from lens distortion of the video camera 2 can be made clear.

$$Xb = Xac + (Xa-Xac)(1+k_1 \times r^2+k_2 \times r^4)$$

$$Yb = Yac + (Ya-Yac)(1+k_1 \times r^2+k_2 \times r^4)$$

$$r = ((Xa-Xac)^2 + (Ya-Yac)^2)^{\frac{1}{2}} \qquad (1)$$

In the equation, the coordinates (Xac, Yac) are coordinates of a pixel located at a center of the SD image. k1 and k2 are coefficients determined on the basis of lens distortion of the video camera 2 or the like. r is a distance between the pixel at the coordinates (Xa, Ya) and a pixel at a center of distortion of the SD image.

In step S43, the CPU 41 determines an area of the SD image obtained as a result of the correction in step S42 which area corresponds to the size of the small screen W. In step S44, the CPU 41 selects coordinates (Xb, Yb) on the small screen W of each pixel of the SD image within the determined area. That is, coordinates on the small screen W of the SD image after the correction to be displayed on the small screen W are selected.

The SD image obtained as a result of image pickup by the video camera 2 (FIG. 17A) is enlarged and deformed into a shape of a bobbin as shown by a solid line in FIG. 17B, for example, by the correction according to Equation (1). From the SD image, the coordinates within the area determined in step S43 as shown by a dotted line in FIG. 17B are selected (FIG. 17C). Incidentally, coordinates (Xai, Yai) in FIG. 17A represent arbitrary coordinates (Xa, Ya), and coordinates (Xbi, Ybi) in FIG. 17B and FIG. 17C represent coordinates (Xb, Yb) obtained as a result of correction of the coordinates (Xai, Yai).

In step S45, the CPU 41 selects coordinates of one pixel from the coordinates on the small screen W of the SD image after the correction, the coordinates on the small screen W of the SD image after the correction being selected in step S44. In step S46, the CPU 41 converts the coordinates into coordinates on the display 12A.

Specifically, the coordinates on the small screen W selected in step S45 are converted into corresponding coordinates on the display 12A when the SD image of the area determined in step S43 (FIG. 17C) is mapped onto the small screen W for displaying the image of the video camera 2 having the camera number selected in step S41.

For example, in a case where the camera number of the video camera 2-5 is selected in step S41, the coordinates on the small screen W selected in step S45 are converted into corresponding coordinates on the display 12A when the SD image of the area determined in step S43 is mapped onto the small screen W5.

Next, in step S47, the CPU 41 stores, in the correspondence table Tb2 (FIG. 15), the coordinates on the small screen W of the SD image after the correction, the coordinates on the small screen W of the SD image after the correction being selected in step S45, and the coordinates on the display 12A obtained in step S46 in association with each other.

In step S48, the CPU 41 determines whether or not all the coordinates selected in step S44 are selected. When the CPU 41 determines that there remain coordinates yet to be selected, the process returns to step S45 to select next coordinates and perform the subsequent process.

When the CPU 41 determines in step S48 that all the coordinates are selected, the process proceeds to step S49, where the CPU 41 determines whether or not all the camera numbers are selected. When the CPU 41 determines that there remains a camera number yet to be selected, the process returns to step S41 to select the next camera number.

When the CPU 41 determines in step S49 that all the camera numbers are selected, the process is ended.

Thus, a pixel value output at given coordinates Ph (not shown) on the display 12A within the small screen W5, for example, is a pixel value of a pixel located at coordinates (Xai, Yai) on the small screen W (FIG. 17A) (step S25 in FIG. 13) of the SD image obtained as a result of image pickup by the video camera 2-5 which coordinates (Xai, Yai) become coordinates (Xbi, Ybi) on the small screen W (FIG. 17B) (step S24 in FIG. 13) detected as coordinates corresponding to the coordinates Ph on the display 12A as a result of correction in step S42 in FIG. 16.

That is, without the need for calculating coordinates of the input SD image obtained as a result of image pickup by the video camera 2 which coordinates accommodate lens distortion of the video camera 2 or calculating coordinates on the display 12A according to a divided display format, the image processing apparatus 11 can generate an HD image dividedly displaying the SD image obtained as a result of image pickup by the video camera 2 and subjected to distortion correction by only setting pixel values of the SD image in the HD image according to the coordinate conversion table Ta as shown in FIG. 11.

Since the coordinates (Xb, Yb) on the display 12A of the SD image after the correction in the correspondence table Tb2 (FIG. 15) are calculated according to Equation (1) as described above, reverse correction is performed by optimization corresponding to the equation to calculate the coordinates on the small screen W of the SD image before the correction in step S25 in FIG. 13.

Description will next be made of operation of the image processing apparatus 11 in a case where nine video cameras 2-1 to 2-9 are disposed so as to form a plane in a vertical direction with respect to a distant subject 1 as shown in FIG. 18 and images obtained as a result of image pickup by the video camera 2 are dividedly displayed as shown in FIG. 19 (such a use condition will hereinafter be referred to as a second use condition as appropriate).

In this example, the video cameras 2 are disposed such that image pickup areas of the video cameras 2 adjacent to each other overlap each other as indicated by frames of dotted lines in FIG. 20. For example, the image pickup area of the video camera 2-1 (a frame of a solid line in FIG. 21) overlaps the image pickup area of the video camera 2-2 (a frame of a solid line in FIG. 22), the image pickup area of the video camera 2-4 (a frame of a solid line in FIG. 23), and the image pickup area of the video camera 2-5 (a frame of a solid line in FIG. 24).

The image processing apparatus 11 performs the process shown in the flowchart of FIG. 11 as in the case of the first use form, using a coordinate conversion table Ta as shown in FIG. 25 generated by the coordinate conversion table generating apparatus 13 on the basis of the second use condition and the lens distortion of the video camera 2 or the like. That is, although values of coordinates and the like handled in the process of the image processing apparatus 11 are changed, the process of the image processing apparatus 11 in the case of the first use condition and the process of the image processing apparatus 11 in the case of the second use condition are essentially the same. Therefore it is possible to deal readily with a change in the use condition.

Incidentally, unlike the case of the first use condition (FIG. 10), an HD image is displayed on the whole of the display 12A of the display device 12 in a display format of FIG. 19. Therefore, unlike the case of the first use condition (FIG. 12), information indicating that black color is to be outputted is not set in the coordinate conversion table Ta. Thus, in this example, a determination of YES is not made in step S3 in the flowchart of FIG. 11, and therefore the storing of a pixel value for outputting black color is not performed in the process of FIG. 8.

Description will next be made of operation of the coordinate conversion table generating apparatus 13 when generating the coordinate conversion table Ta (FIG. 25) used in this example with reference to a flowchart of FIG. 26.

In step S61, the CPU 41 of the coordinate conversion table generating apparatus 13 selects coordinates of one pixel on the display 12A of the display device 12 (coordinates of one pixel forming an HD image) (FIG. 19). In step S62, the CPU 41 selects one camera number.

In step S63, the CPU 41 determines whether or not the coordinates on the display 12A selected in step S61 are associated with the camera number selected in step S62 in a correspondence table Tc1 shown in FIG. 27 which table shows correspondences between coordinates on the display 12A and camera numbers.

Coordinates on the display 12A in the correspondence table Tc1 shown in FIG. 27 are associated with the camera numbers of the video cameras 2 having the image pickup areas as shown in FIG. 20 corresponding to areas as shown in FIG. 28.

For example, coordinates within the area Q1 (FIG. 29) corresponding to the image pickup area of the video camera 2-1 (FIG. 21) on the display 12A are associated with the camera number of the video camera 2-1. Coordinates within the area Q2 (FIG. 30) corresponding to the image pickup area of the video camera 2-2 (FIG. 22) on the display 12A are associated with the camera number of the video camera 2-2. Incidentally, coordinates on the display 12A belonging to both the area Q1 and the area Q2 (for example coordinates (Xhi, Yhi) in FIG. 29 and FIG. 30) are associated with the two camera numbers of the video cameras 2-1 and 2-2.

Returning to FIG. 26, when the CPU 41 determines in step S63 that the coordinates on the display 12A selected in step S61 are associated with the camera number selected in step S62, the process proceeds to step S64.

In step S64, the CPU 41 detects coordinates on a small screen W associated with the coordinates on the display 12A selected in step S61 and the camera number selected in step S62 from a correspondence table Tc2 stored on the hard disk 44 and shown in FIG. 31 which table shows correspondences between coordinates on the display 12A, coordinates on the small screen W of an image for the small screen W which image is cut out from an SD image obtained as a result of image pickup by the video camera 2 and corrected on the basis of lens distortion of the video camera 2 or the like, and the camera number of the video camera 2 having an image pickup area corresponding to coordinates on the display 12A. Incidentally, a method of generating the correspondence table Tc2 will be described later.

Next, in step S65, the CPU 41 calculates coordinates on the small screen W of the SD image before the correction from the coordinates on the small screen W of the SD image after the correction detected in step S64.

When the CPU 41 determines in step S63 that the coordinates on the display 12A selected in step S61 are not associated with the camera number selected in step S62, or when the coordinates on the small screen W of the SD image before the correction are calculated in step S65, the process proceeds to step S66, where the CPU 41 determines whether or not all the camera numbers are selected. When the CPU 41 determines that there remains a camera number yet to be selected, the process returns to step S62 to select the next camera number.

When the CPU 41 determines in step S66 that all the camera numbers are selected, the process proceeds to step S67, where the CPU 41 determines whether or not the coordinates on the display 12A selected in step S61 are associated with a plurality of camera numbers in the correspondence table Tc1 (FIG. 27). When the CPU 41 determines that the coordinates on the display 12A selected in step S61 are associated with a plurality of camera numbers, the process proceeds to step S68.

For example, the coordinates (Xhi, Yhi) on the display 12A shown in FIG. 29 and FIG. 30 are associated with both the camera number of the video camera 2-1 and the camera number of the video camera 2-3 in the correspondence table Tc1. Therefore, when the coordinates (Xhi, Yhi) are selected in step S61, the process proceeds to step S68.

In step S68, the CPU 41 determines coordinates on one small screen W to be set in the coordinate conversion table Ta from coordinates on small screens W of a plurality of SD images before correction (step S65) which coordinates are calculated by performing the process of steps S62 to S65 a plurality of times (for example coordinates calculated when the camera number of the video camera 2-1 is selected in step S62 and coordinates calculated when the camera number of the video camera 2-2 is selected in step S62).

For example, when the coordinates (Xhi, Yhi) (FIGS. 29 and 30) are closer to a center of the area Q1 than a center of the area Q2, coordinates on the display 12A of an SD image before correction which coordinates are calculated when the camera number of the video camera 2-1 is selected are selected.

When the CPU 41 determines in step S67 that the coordinates on the display 12A selected in step S61 are not associated with a plurality of camera numbers in the correspondence table Tc1, or when coordinates on one small screen W are determined in step S68, the process proceeds to step S69.

In step S69, the CPU 41 stores the coordinates on the display 12A selected in step S61, the coordinates on the small screen W calculated in step S65 when the coordinates on the display 12A selected in step S61 are not associated with a plurality of camera numbers or the coordinates on the small screen W determined in step S68 when the coordinates on the display 12A selected in step S61 are associated with a plurality of camera numbers, and the camera number selected in step S62 when the coordinates on the small screen W are calculated, in association with each other in the coordinate conversion table Ta (FIG. 25).

Next, in step S70, the CPU 41 determines whether or not all coordinates on the display 12A are selected. When the CPU 41 determines that there remain coordinates yet to be selected, the process returns to step S61 to select next coordinates and perform the subsequent process.

When the CPU 41 determines in step S70 that all the coordinates are selected, the process is ended.

Description will next be made of a process of generating the correspondence table Tb2 (FIG. 31) used when the coordinate conversion table Ta (FIG. 25) corresponding to the second use condition is generated with reference to a flowchart of FIG. 32. Incidentally, suppose in this case that the coordinate conversion table generating apparatus 13 generates the correspondence table Tb2.

In step S81, the CPU 41 of the coordinate conversion table generating apparatus 13 selects one camera number.

Next, in step S82, assuming an SD image having the same size as the SD image obtained as a result of image pickup by the video camera 2, the CPU 41 corrects coordinates (Xa, Ya) on the small screen W of each pixel forming the SD image (coordinates on the small screen W of the SD image before correction) according to Equation (1) to thereby calculate coordinates (Xb, Yb) (coordinates on the small screen of the SD image after correction).

In step S83, the CPU 41 determines an area of the SD image obtained as a result of the correction in step S82 which area corresponds to the size of the small screen W. In step S84, the CPU 41 selects coordinates (Xb, Yb) on the small screen W of each pixel of the SD image within the determined area. That is, coordinates on the small screen W of the SD image after the correction to be displayed on the small screen W are selected.

Next, in step S85, the CPU 41 selects coordinates of one pixel from the coordinates on the small screen W of the SD image after the correction, the coordinates on the small screen W of the SD image after the correction being selected in step S84. In step S86, the CPU 41 converts the coordinates into coordinates on the display 12A.

Specifically, the coordinates on the small screen W selected in step S85 are converted into corresponding coordinates on the display 12A when the SD image of the area determined in step S83 is mapped onto the small screen W for displaying the image of the video camera 2 having the camera number selected in step S81.

For example, in a case where the camera number of the video camera 2-5 is selected in step S81, the coordinates on the small screen W selected in step S85 are converted into corresponding coordinates on the display 12A when the SD image of the area determined in step S83 is mapped onto the small screen W5 (FIG. 19).

Next, in step S87, the CPU 41 stores the camera number selected in step S81, the coordinates on the small screen W of the SD image after the correction, the coordinates on the small screen W of the SD image after the correction being selected in step S85, and the coordinates on the display 12A obtained in step S86 in association with each other in the correspondence table Tc2 as shown in FIG. 31.

In step S88, the CPU 41 determines whether or not all the coordinates selected in step S84 are selected. When the CPU 41 determines that there remain coordinates yet to be selected, the process returns to step S85 to select next coordinates.

When the CPU 41 determines in step S88 that all the coordinates are selected, the process proceeds to step S89, where the CPU 41 determines whether or not all the camera numbers are selected. When the CPU 41 determines that there remains a camera number yet to be selected, the process returns to step S81 to select the next camera number.

When the CPU 41 determines in step S89 that all the camera numbers are selected, the process is ended.

Description will next be made of operation of the image processing apparatus 11 in a case where eight (N = 8) video cameras 2-1 to 2-8 are disposed such that scenery in all directions of 360 degrees is a subject 1 as shown in FIG. 4 and images obtained as a result of image pickup by the video camera 2 are dividedly displayed as shown in FIG. 5 (such a use condition will hereinafter be referred to as a third use condition as appropriate).

Incidentally, the eight video cameras 2 shown in FIG. 4 are in practice arranged at a predetermined angle in an omnidirectional camera 101 as shown in FIG. 33 such that centers of projection of the video cameras 2 coincide near a center of the omnidirectional camera 101 and directions of lines of sight of the video cameras 2 are in one horizontal plane.

Plane mirrors 110 are disposed in the directions of the lines of sight of the video cameras 2.

That is, the video cameras 2 pick up an image of surrounding scenery reflected by the corresponding plane mirrors 110, whereby the omnidirectional camera 101 as a whole can pick up an image of the scenery in 360 degrees in a horizontal direction.

The image processing apparatus 11 performs the process shown in the flowchart of FIG. 11 as in the case of the first use condition and the second use condition, using a coordinate conversion table Ta generated by the coordinate conversion table generating apparatus 13 on the basis of the third use condition and the lens distortion of the video camera 2 or the like. As a result, eight images obtained as a result of image pickup by the video camera 2 can be dividedly displayed as shown in FIG. 5.

Description will next be made of operation of the coordinate conversion table generating apparatus 13 in generating the coordinate conversion table Ta used in this example with reference to a flowchart of FIG. 34.

A process performed in steps S101 to S104 is the same as in steps S61 to S64 in FIG. 26, and therefore description thereof will be omitted.

In step S105, the CPU 41 optimizes coordinates on a small screen W of an SD image after correction detected in step S104 and performs a process reverse to a mirror inversion process (a reverse mirror inversion process) to thereby calculate coordinates on the small screen W of the SD image before the correction.

A process performed in steps S106 to S110 is the same as in steps S66 to S70 in FIG. 26, and therefore description thereof will be omitted.

Description will next be made of a process of generating a correspondence table used in step S104 which table shows correspondences between coordinates on the display 12A and coordinates on the small screen W of the SD image after the correction with reference to a flowchart of FIG. 35. Incidentally, suppose in this case that the coordinate conversion table generating apparatus 13 generates the correspondence table.

In step S121, the CPU 41 of the coordinate conversion table generating apparatus 13 selects one camera number.

Next, in step S122, assuming an SD image having the same size as the SD image obtained as a result of image pickup by the video camera 2, the CPU 41 corrects coordinates $(Xa, Ya)$ of each pixel forming the SD image according to Equation (1) to thereby calculate coordinates $(Xb, Yb)$. Also, the CPU 41 performs the mirror inversion process.

A process performed in steps S123 to S129 is the same as in steps S83 to S89 in FIG. 32, and therefore description thereof will be omitted.

The series of processes described above can be implemented not only by hardware but also by software. When the series of processes is to be implemented by software, a program forming the software is installed onto a computer, and the computer executes the program, whereby the image processing apparatus 11 and the coordinate conversion table generating apparatus 13 described above are functionally implemented.

It is to be noted that in the present specification, the steps describing the program provided by a recording medium include not only processes carried out in time series in the described order but also processes carried out in parallel or individually and not necessarily in time series.

Also, in the present specification, a system refers to an apparatus as a whole formed by a plurality of apparatus.

Industrial Applicability

According to the first present invention, it is possible to make divided display of small screens easily.

According to the second present invention, it is possible to make divided display of small screens easily even when a use condition is changed.

**Claims**

1. An image processing apparatus comprising:

   detecting means for detecting coordinates on a small screen for displaying a small image including predetermined coordinates on a large screen for displaying a large image comprising a plurality of small images disposed at predetermined positions, said coordinates on said small screen corresponding to said predetermined coordinates on said large screen;
   reading means for reading a pixel value of a pixel of the predetermined said small image, said pixel being located at a position corresponding to the coordinates on said small screen detected by said detecting means; and
   outputting means for outputting said pixel value read by said reading means as a pixel value of a pixel of said large image, said pixel being located at a position corresponding to said predetermined coordinates on said large screen.

2. The information processing apparatus as claimed in claim 1, further comprising storing means for storing a table in which the coordinates on said large screen, the coordinates on said small screen including the coordinates on said large screen, said coordinates on said small screen corresponding to the coordinates on said large screen, and information for identifying said small image to be displayed on said small screen are associated with each other,
   wherein said detecting means detects the coordinates on said small screen including said predetermined coordinates on said large screen, said coordinates on said small screen corresponding to said predetermined coordinates, from said table; and
   said reading means reads the pixel value of the pixel of said small image identified by the information for identifying said small image, said information being associated with said predetermined coordinates in said table, said pixel being located at the position corresponding to the coordinates on said small screen detected by said detecting means.

3. The image processing apparatus as claimed in claim 1, wherein said small image is an image corresponding to a picked-up image obtained as a result of image pickup by an image pickup device.

4. An image processing method comprising:

   a detecting step for detecting coordinates on a small screen for displaying a small image including predetermined coordinates on a large screen for displaying a large image comprising a plurality of small images disposed at predetermined positions, said coordinates on said small screen corresponding to said predetermined coordinates on said large screen;
   a reading step for reading a pixel value of a pixel of the predetermined said small image, said pixel being located at a position corresponding to the coordinates on said small screen detected by a process of said detecting step; and
   an outputting step for outputting said pixel value read by a process of said reading step as a pixel value of a pixel of said large image, said pixel being located at a position corresponding to said predetermined coordinates on said large screen.

5. A recording medium on which a computer readable program is recorded, said program comprising:

   a detecting control step for controlling detecting coordinates on a small screen for displaying a small image including predetermined coordinates on a large screen for displaying a large image comprising a plurality of small images disposed at predetermined positions, said coordinates on said small screen corresponding to said predetermined coordinates on said large screen;
   a reading control step for controlling reading a pixel value of a pixel of the predetermined said small image, said pixel being located at a position corresponding to the coordinates on said small screen detected by a process of said detecting control step; and
   an outputting control step for controlling outputting said pixel value read by a process of said reading control step as a pixel value of a pixel of said large image, said pixel being located at a position corresponding to said predetermined coordinates on said large screen.

6. A program that makes a computer perform a process comprising:

   a detecting control step for controlling detecting coordinates on a small screen for displaying a small image including predetermined coordinates on a large screen for displaying a large image comprising a plurality of small images disposed at predetermined positions, said coordinates on said small screen corresponding to said predetermined coordinates on said large screen;

a reading control step for controlling reading a pixel value of a pixel of the predetermined said small image, said pixel being located at a position corresponding to the coordinates on said small screen detected by a process of said detecting control step; and

an outputting control step for controlling outputting said pixel value read by a process of said reading control step as a pixel value of a pixel of said large image, said pixel being located at a position corresponding to said predetermined coordinates on said large screen.

7. An information processing apparatus for generating a first table supplied to an image processing apparatus, said image processing apparatus detecting, from a first table, coordinates on a small screen for displaying a small image including predetermined coordinates on a large screen for displaying a large image comprising a plurality of small images disposed at predetermined positions, said coordinates on said small screen corresponding to said predetermined coordinates on said large screen, reading a pixel value of a pixel of said small image identified by information for identifying said small image, said information being associated with said predetermined coordinates in said first table, said pixel being located at a position corresponding to the detected coordinates on said small screen, and outputting the read said pixel value as a pixel value of a pixel of said large image, said pixel being located at a position corresponding to said predetermined coordinates on said large screen, said information processing apparatus comprising:

first detecting means for detecting the coordinates on said small screen including the coordinates on said large screen, said coordinates on the small screen corresponding to the coordinates on said large screen;

second detecting means for detecting the information for identifying said small image, said information being associated with the coordinates on said large screen; and

generating means for generating said first table by storing the coordinates on said large screen, the coordinates on said small screen detected by said first detecting means, and the information for identifying said small image detected by said second detecting means in association with each other.

8. The information processing apparatus as claimed in claim 7, wherein:

said small image is an image corresponding to a picked-up image obtained as a result of image pickup by an image pickup device; and

the coordinates on said large screen are associated with information for identifying said image pickup device having a corresponding image pickup area as the information for identifying said small image in each area corresponding to the image pickup area of said image pickup device.

9. The information processing apparatus as claimed in claim 8, further comprising storing means for storing a second table in which coordinates on said small screen of said picked-up image for said small screen which image is cut out from said picked-up image after being subjected to correction on a basis of a condition of an optical system of said image pickup device and coordinates on said large screen when said picked-up image for said small screen is positioned on the predetermined said small screen, said coordinates on said large screen corresponding to the coordinates on said small screen, are associated with each other,

wherein said first detecting means detects coordinates on said small screen corresponding to coordinates on said large screen from said second table, and detects coordinates on said small screen of said picked-up image before the correction from the detected coordinates on said small screen.

10. An information processing method of an information processing apparatus for generating a first table supplied to an image processing apparatus, said image processing apparatus detecting, from a first table, coordinates on a small screen for displaying a small image including predetermined coordinates on a large screen for displaying a large image comprising a plurality of small images disposed at predetermined positions, said coordinates on said small screen corresponding to said predetermined coordinates on said large screen, reading a pixel value of a pixel of said small image identified by information for identifying said small image, said information being associated with said predetermined coordinates in said first table, said pixel being located at a position corresponding to the detected coordinates on said small screen, and outputting the read said pixel value as a pixel value of a pixel of said large image, said pixel being located at a position corresponding to said predetermined coordinates on said large screen, said information processing method comprising:

a first detecting step for detecting the coordinates on said small screen including the coordinates on said large screen, said coordinates on the small screen corresponding to the coordinates on said large screen;
a second detecting step for detecting the information for identifying said small image, said information being associated with the coordinates on said large screen; and
a generating step for generating said first table by storing the coordinates on said large screen, the coordinates on said small screen detected by a process of said first detecting step, and the information for identifying said small image detected by a process of said second detecting step in association with each other.

11. A recording medium on which a computer readable program of an information processing apparatus for generating a first table supplied to an image processing apparatus is recorded, said image processing apparatus detecting, from a first table, coordinates on a small screen for displaying a small image including predetermined coordinates on a large screen for displaying a large image comprising a plurality of small images disposed at predetermined positions, said coordinates on said small screen corresponding to said predetermined coordinates on said large screen, reading a pixel value of a pixel of said small image identified by information for identifying said small image, said information being associated with said predetermined coordinates in said first table, said pixel being located at a position corresponding to the detected coordinates on said small screen, and outputting the read said pixel value as a pixel value of a pixel of said large image, said pixel being located at a position corresponding to said predetermined coordinates on said large screen, said program comprising:

a first detecting control step for controlling detecting the coordinates on said small screen including the coordinates on said large screen, said coordinates on said small screen corresponding to the coordinates on said large screen;
a second detecting control step for controlling detecting the information for identifying said small image, said information being associated with the coordinates on said large screen; and
a generating control step for controlling generating said first table by storing the coordinates on said large screen, the coordinates on said small screen detected by a process of said first detecting control step, and the information for identifying said small image detected by a process of said second detecting control step in association with each other.

12. A program of an information processing apparatus for generating a first table supplied to an image processing apparatus, said image processing apparatus detecting, from a first table, coordinates on a small screen for displaying a small image including predetermined coordinates on a large screen for displaying a large image comprising a plurality of small images disposed at predetermined positions, said coordinates on said small screen corresponding to said predetermined coordinates on said large screen, reading a pixel value of a pixel of said small image identified by information for identifying said small image, said information being associated with said predetermined coordinates in said first table, said pixel being located at a position corresponding to the detected coordinates on said small screen, and outputting the read said pixel value as a pixel value of a pixel of said large image, said pixel being located at a position corresponding to said predetermined coordinates on said large screen, said program **characterized by** making a computer perform a process comprising:

a first detecting control step for controlling detecting the coordinates on said small screen including the coordinates on said large screen, said coordinates on said small screen corresponding to the coordinates on said large screen;
a second detecting control step for controlling detecting the information for identifying said small image, said information being associated with the coordinates on said large screen; and
a generating control step for controlling generating said first table by storing the coordinates on said large screen, the coordinates on said small screen detected by a process of said first detecting control step, and the information for identifying said small image detected by a process of said second detecting control step in association with each other.

F I G. 1

IMAGE PROCESSING APPARATUS — 3

4 — 4A

VIDEO CAMERA — 2-1

VIDEO CAMERA — 2-2

VIDEO CAMERA — 2-N

. . .

SUBJECT — 1

# F I G. 2

# F I G. 3

| | | |
|:---:|:---:|:---:|
| W1 | W2 | W3 |
| W4 | W5 | W6 |
| W7 | W8 | W9 |

# F I G. 4

# F I G. 5

| | | | |
|---|---|---|---|
| W1 | W2 | W3 | W4 |
| W5 | W6 | W7 | W8 |

# F I G. 6

# F I G. 7

EP 1 542 471 A1

1920

1080

# F I G. 8

EP 1 542 471 A1

# FIG. 9

```
         41              42              43                 44
         |               |               |                  |
    ┌─────────┐     ┌─────────┐     ┌─────────┐     ┌───────────────┐
    │   CPU   │     │   ROM   │     │   RAM   │     │   HARD DISK   │
    └─────────┘     └─────────┘     └─────────┘     └───────────────┘
         ⇕               ⇓               ⇕                  ⇕                      45
 ◁══════════════════════════════════════════════════════════════════════════════▷
         ⇕
 ┌────────────────────────────────────────────────────────────────────────┐
 │                      INPUT/OUTPUT INTERFACE                             │  46
 └────────────────────────────────────────────────────────────────────────┘
         ↓            ↑               ⇕                      ⇕
   ┌─────────┐   ┌─────────┐   ┌───────────────┐     ┌─────────┐    ◎ ─ 61
   │ OUTPUT  │   │  INPUT  │   │ COMMUNICATION │     │         │    ◎ ─ 62
   │  UNIT   │   │  UNIT   │   │     UNIT      │     │  DRIVE  │    ◎ ─ 63
   └─────────┘   └─────────┘   └───────────────┘     │         │    ▢ ─ 64
       47            48               49             └─────────┘    ▢ ─ 21
                                                          50
```

EP 1 542 471 A1

# FIG. 10

EP 1 542 471 A1

# F I G. 1 1

```
┌─────────────────────────────────────┐
│ START DISPLAY PROCESS OF IMAGE       │
│ PROCESSING APPARATUS                 │
└─────────────────────────────────────┘
                    │
                    ▼
┌─────────────────────────────────────┐
│ READ COORDINATE CONVERSION TABLE     │  S1
└─────────────────────────────────────┘
                    │
                    ▼
┌─────────────────────────────────────┐
│ SELECT COORDINATES OF ONE PIXEL ON DISPLAY │  S2
└─────────────────────────────────────┘
                    │
          YES       ▼
    ◄──────< IS BLACK COLOR OUTPUT INFORMATION SET? >  S3
    │               │
    │               │ NO
    │               ▼
    │     ┌─────────────────────────────────────┐
    │     │ DETECT CAMERA NUMBER CORRESPONDING TO │  S4
    │     │ SELECTED DISPLAY COORDINATES FROM     │
    │     │ COORDINATE CONVERSION TABLE           │
    │     └─────────────────────────────────────┘
    │               │
    │               ▼
    │     ┌─────────────────────────────────────┐
    │     │ SELECT FIELD MEMORY CORRESPONDING TO  │  S5
    │     │ DETECTED CAMERA NUMBER                │
    │     └─────────────────────────────────────┘
    │               │
    │               ▼
    │     ┌─────────────────────────────────────┐
    │     │ DETECT SMALL SCREEN COORDINATES       │  S6
    │     │ CORRESPONDING TO SELECTED DISPLAY     │
    │     │ COORDINATE CONVERSION TABLE           │
    │     └─────────────────────────────────────┘
    │               │
    ▼               ▼
┌──────────────┐ ┌──────────────────────┐
│ SET BLACK    │ │ SET PIXEL AT DETECTED │  S7
│ COLOR PIXEL  │ │ SMALL SCREEN          │
│ TO SELECTED  │ │ COORDINATES           │
│ DISPLAY      │ │ TO SELECTED DISPLAY   │
│ COORDINATES  │ │ COORDINATES           │
└──────────────┘ └──────────────────────┘
   S8            │
    │            │
    ▼            ▼
   NO
  ◄───< ARE ALL COORDINATES ON DISPLAY SELECTED? >  S9
                    │
                    │ YES
                    ▼
              ┌──────────┐
              │   END    │
              └──────────┘
```

25

# F I G. 1 2

| CAMERA NUMBER | COORDINATES ON SMALL SCREEN | COORDINATES ON DISPLAY | |
|---|---|---|---|
| ⋮ | ⋮ | ⋮ | |
| 1 | ××, ×× | ××, ×× | |
| — | — | ××, ×× | BLACK COLOR OUTPUT |
| ⋮ | ⋮ | ⋮ | |
| ⋮ | | | |

EP 1 542 471 A1

EP 1 542 471 A1

# F I G. 1 3

( START COORDINATE CONVERSION TABLE GENERATING PROCESS )

SELECT COORDINATES OF ONE PIXEL ON DISPLAY — S21

ARE SELECTED DISPLAY COORDINATES WITHIN SMALL SCREEN FOR DISPLAYING SD IMAGE? — S22

NO ⟵

YES

DETECT CAMERA NUMBER CORRESPONDING TO SELECTED DISPLAY COORDINATES FROM TABLE OF CORRESPONDENCES BETWEEN DISPLAY COOR- DINATES AND CAMERA NUMBERS — S23

DETECT SMALL SCREEN COORDINATES OF SD IMAGE AFTER CORRECTION WHICH COORDINATES CORRESPOND TO SELECTED DISPLAY COORDINATES FROM TABLE OF CORRESPONDENCES BETWEEN DISPLAY COORDINATES AND SMALL SCREEN COOR- DINATES OF SD IMAGE AFTER CORRECTION — S24

CALCULATE SMALL SCREEN COORDINATES OF SD IMAGE BEFORE CORRECTION FROM DETECTED SMALL SCREEN COORDINATES OF SD IMAGE AFTER CORRECTION — S25

STORE SELECTED DISPLAY COORDINATES AND INFOR- MATION INDICATING THAT BLACK COLOR IS TO BE OUTPUTTED — S27

STORE SELECTED DISPLAY COORDINATES, CAMERA NUMBER, AND SMALL SCREEN COORDINATES OF SD IMAGE BEFORE CORRECTION — S26

ARE ALL COORDINATES ON DISPLAY SELECTED? — S28

NO ⟶

YES

( END )

27

# F I G. 1 4

| COORDINATES ON DISPLAY | CAMERA NUMBER |
|---|---|
| ⋮ | ⋮ |
| × ×, × × | CAMERA NUMBER OF VIDEO CAMERA 2-1 |
| ⋮ | ⋮ |
| × ×, × × | CAMERA NUMBER OF VIDEO CAMERA 2-2 |
| ⋮ | ⋮ |
| ⋮ | ⋮ |

# F I G. 1 5

| COORDINATES ON DISPLAY | COORDINATES ON SMALL SCREEN OF SD IMAGE AFTER CORRECTION |
|---|---|
| ⋮ | ⋮ |
| × ×, × × | × ×, × × |
| × ×, × × | × ×, × × |
| ⋮ | ⋮ |
| ⋮ | ⋮ |

# F I G. 1 6

START PROCESS OF GENERATING TABLE OF CORRE-
SPONDENCES BETWEEN DISPLAY COORDINATES AND SMALL
SCREEN COORDINATES OF SD IMAGE AFTER CORRECTION

SELECT ONE CAMERA NUMBER — S41

PERFORM LENS DISTORTION CORRECTION — S42

DETERMINE AREA OF SD IMAGE AFTER COR-
RECTION WHICH AREA IS TO BE DISPLAYED
ON SMALL SCREEN — S43

SELECT SMALL SCREEN COORDINATES OF AREA
OF SD IMAGE AFTER CORRECTION WHICH AREA
IS TO BE DISPLAYED ON SMALL SCREEN — S44

SELECT SMALL SCREEN COORDINATES OF ONE PIXEL
OF AREA OF SD IMAGE AFTER CORRECTION WHICH
AREA IS TO BE DISPLAYED ON SMALL SCREEN — S45

CONVERT SELECTED SMALL SCREEN COORDINATES OF
AREA OF SD IMAGE AFTER CORRECTION WHICH AREA
IS TO BE DISPLAYED ON SMALL SCREEN INTO
DISPLAY COORDINATES — S46

STORE DISPLAY COORDINATES AND SMALL SCREEN
COORDINATES OF SD IMAGE AFTER CORRECTION — S47

ARE ALL SMALL SCREEN COORDINATES OF AREA
OF SD IMAGE AFTER CORRECTION WHICH AREA IS
TO BE DISPLAYED ON SMALL SCREEN SELECTED? — S48
NO

YES

ARE ALL CAMERA NUMBERS SELECTED? — S49
NO

YES

END

29

# F I G. 1 7 A

(Xac, Yac)

(Xai, Yai)

# F I G. 1 7 B

(Xac, Yac)

(Xbi, Ybi)

# F I G. 1 7 C

(Xac, Yac)

(Xbi, Ybi)

# F I G. 1 8

EP 1 542 471 A1

# FIG. 19

EP 1 542 471 A1

# F I G. 2 0

EP 1 542 471 A1

# FIG. 21

EP 1 542 471 A1

F I G. 2 2

EP 1 542 471 A1

# F I G. 2 4

EP 1 542 471 A1

# F I G. 2 5

| CAMERA NUMBER | COORDINATES ON SMALL SCREEN | COORDINATES ON DISPLAY |
|---|---|---|
| 1 | × ×, × × | × ×, × × |
| 1 | × ×, × × | × ×, × × |

# F I G. 2 6

```
┌─────────────────────────────────────┐
│ START COORDINATE CONVERSION TABLE    │
│ GENERATING PROCESS                   │
└─────────────────────────────────────┘
```

SELECT COORDINATES OF ONE PIXEL ON DISPLAY — S61

SELECT ONE CAMERA NUMBER — S62

DO SELECTED DISPLAY COORDINATES CORRESPOND TO CAMERA NUMBER? — S63
NO

YES

DETECT SMALL SCREEN COORDINATES OF SD IMAGE AFTER CORRECTION WHICH COORDINATES CORRESPOND TO SELECTED DISPLAY COORDINATES AND SELECTED CAMERA NUMBER FROM TABLE OF CORRESPONDENCES BETWEEN DISPLAY COORDINATES AND SMALL SCREEN COORDINATES OF SD IMAGE AFTER CORRECTION — S64

CALCULATE SMALL SCREEN COORDINATES OF SD IMAGE BEFORE CORRECTION FROM DETECTED SMALL SCREEN COORDINATES OF SD IMAGE AFTER CORRECTION — S65

ARE ALL CAMERA NUMBERS SELECTED? — S66
NO

YES

ARE SELECTED DISPLAY COORDINATES ASSOCIATED WITH A PLURALITY OF CAMERA NUMBERS? — S67
NO

YES

DETERMINE COORDINATES OF ONE SD IMAGE BEFORE CORRECTION FROM CALCULATED COORDINATES OF SD IMAGES BEFORE CORRECTION — S68

STORE SELECTED DISPLAY COORDINATES, DETERMINED CAMERA NUMBER, AND SMALL SCREEN COORDINATES OF SD IMAGE BEFORE CORRECTION — S69

ARE ALL COORDINATES ON HD IMAGE SELECTED? — S70
NO

YES

END

# F I G. 2 7

| COORDINATES ON DISPLAY | CAMERA NUMBER |
|---|---|
| ×× , ×× | CAMERA NUMBER OF VIDEO CAMERA 2-1 |
| ×× , ×× | CAMERA NUMBER OF VIDEO CAMERA 2-2 |
| | |

# F I G. 2 8

EP 1 542 471 A1

# F I G. 2 9

Q1

(Xhi, Yhi)

12A

EP 1 542 471 A1

F I G. 3 0

# F I G. 3 1

| CAMERA NUMBER | COORDINATES ON DISPLAY | COORDINATES ON SMALL SCREEN OF SD IMAGE AFTER CORRECTION |
|---|---|---|
| 1 | ××, ×× | ××, ×× |
| 1 | ××, ×× | ××, ×× |

# F I G. 3 2

START PROCESS OF GENERATING TABLE OF CORRE-
SPONDENCES BETWEEN DISPLAY COORDINATES AND SMALL
SCREEN COORDINATES OF SD IMAGE AFTER CORRECTION

SELECT ONE CAMERA NUMBER — S81

PERFORM LENS DISTORTION CORRECTION — S82

DETERMINE AREA OF SD IMAGE AFTER COR-
RECTION WHICH AREA IS TO BE DISPLAYED
ON SMALL SCREEN — S83

SELECT SMALL SCREEN COORDINATES OF AREA
OF SD IMAGE AFTER CORRECTION WHICH AREA
IS TO BE DISPLAYED ON SMALL SCREEN — S84

SELECT SMALL SCREEN COORDINATES OF ONE PIXEL
OF AREA OF SD IMAGE AFTER CORRECTION WHICH
AREA IS TO BE DISPLAYED ON SMALL SCREEN — S85

CONVERT SELECTED SMALL SCREEN COORDINATES OF
AREA OF SD IMAGE AFTER CORRECTION WHICH AREA
IS TO BE DISPLAYED ON SMALL SCREEN INTO
DISPLAY COORDINATES — S86

STORE CAMERA NUMBER, SMALL SCREEN
COORDINATES OF SD IMAGE AFTER CORRECTION,
AND DISPLAY COORDINATES — S87

ARE ALL SMALL SCREEN COORDINATES OF AREA
OF SD IMAGE AFTER CORRECTION WHICH AREA IS
TO BE DISPLAYED ON SMALL SCREEN SELECTED? — S88
NO

YES

ARE ALL CAMERA NUMBERS SELECTED? — S89
NO

YES

END

45

# F I G. 3 3

EP 1 542 471 A1

# F I G. 3 4

START COORDINATE CONVERSION TABLE
GENERATING PROCESS

SELECT COORDINATES OF ONE PIXEL ON DISPLAY — S101

SELECT ONE CAMERA NUMBER — S102

NO ← DO SELECTED DISPLAY COORDINATES
CORRESPOND TO CAMERA NUMBER? — S103

↓ YES

DETECT SMALL SCREEN COORDINATES OF SD IMAGE AFTER — S104
CORRECTION WHICH COORDINATES CORRESPOND TO
SELECTED DISPLAY COORDINATES AND SELECTED CAMERA
NUMBER FROM TABLE OF CORRESPONDENCES BETWEEN
DISPLAY COORDINATES AND SMALL SCREEN COORDINATES
OF SD IMAGE AFTER CORRECTION

CALCULATE SMALL SCREEN COORDINATES OF SD IMAGE — S105
BEFORE CORRECTION FROM DETECTED SMALL SCREEN
COORDINATES OF SD IMAGE AFTER CORRECTION

ARE ALL CAMERA NUMBERS SELECTED? — S106
NO

↓ YES

ARE SELECTED DISPLAY COORDINATES ASSOCIATED — S107
WITH A PLURALITY OF CAMERA NUMBERS? NO

↓ YES

DETERMINE COORDINATES OF ONE SD IMAGE BEFORE — S108
CORRECTION FROM CALCULATED COORDINATES OF SD
IMAGES BEFORE CORRECTION

STORE SELECTED DISPLAY COORDINATES, DETER- — S109
MINED CAMERA NUMBER, AND SMALL SCREEN COOR-
DINATES OF SD IMAGE BEFORE CORRECTION

ARE ALL COORDINATES ON HD IMAGE SELECTED? — S110
NO

↓ YES

END

47

# F I G. 3 5

```
┌─────────────────────────────────────────────────┐
│ START PROCESS OF GENERATING TABLE OF CORRE-       │
│ SPONDENCES BETWEEN DISPLAY COORDINATES AND SMALL  │
│ SCREEN COORDINATES OF SD IMAGE AFTER CORRECTION   │
└─────────────────────────────────────────────────┘
```

SELECT ONE CAMERA NUMBER — S121

PERFORM LENS DISTORTION CORRECTION — S122

DETERMINE AREA OF SD IMAGE AFTER COR-RECTION WHICH AREA IS TO BE DISPLAYED ON SMALL SCREEN — S123

SELECT SMALL SCREEN COORDINATES OF AREA OF SD IMAGE AFTER CORRECTION WHICH AREA IS TO BE DISPLAYED ON SMALL SCREEN — S124

SELECT SMALL SCREEN COORDINATES OF ONE PIXEL OF AREA OF SD IMAGE AFTER CORRECTION WHICH AREA IS TO BE DISPLAYED ON SMALL SCREEN — S125

CONVERT SELECTED SMALL SCREEN COORDINATES OF AREA OF SD IMAGE AFTER CORRECTION WHICH AREA IS TO BE DISPLAYED ON SMALL SCREEN INTO DISPLAY COORDINATES — S126

STORE CAMERA NUMBER, SMALL SCREEN COORDINATES OF SD IMAGE AFTER SD CORRECTION, AND DISPLAY COORDINATES — S127

ARE ALL SMALL SCREEN COORDINATES OF AREA OF SD IMAGE AFTER CORRECTION WHICH AREA IS TO BE DISPLAYED ON SMALL SCREEN SELECTED? — S128 — NO

YES

ARE ALL CAMERA NUMBERS SELECTED? — S129 — NO

YES

END

| INTERNATIONAL SEARCH REPORT | International application No. |
|---|---|
| | PCT/JP03/09062 |

**A. CLASSIFICATION OF SUBJECT MATTER**
Int.Cl$^7$  H04N7/18, G09G5/00

According to International Patent Classification (IPC) or to both national classification and IPC

**B. FIELDS SEARCHED**

Minimum documentation searched (classification system followed by classification symbols)
Int.Cl$^7$  H04N7/18, G09G5/00

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 07-077965 A  (Sanyo Electric Co., Ltd.), 20 March, 1995 (20.03.95), Full text (Family: none) | 1-12 |
| A | JP 09-270954 A  (Hitachi, Ltd.), 14 October, 1997 (14.10.97), Full text (Family: none) | 1-12 |
| A | WO 00/64175 A1  (Matsushita Electric Industrial Co., Ltd.), 26 October, 2000 (26.10.00), Figs. 1, 6 to 11 & EP 1179958 A1 | 1-12 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 October, 2003 (21.10.03) | 11 November, 2003 (11.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)